(19) Europäisches Patentamt
European Patent Office
Office européen des brevets

(11) EP 4 498 323 A1

(12) EUROPÄISCHE PATENTANMELDUNG

(43) Veröffentlichungstag:
29.01.2025 Patentblatt 2025/05

(51) Internationale Patentklassifikation (IPC):
G06T 11/00 (2006.01)

(21) Anmeldenummer: 23188102.0

(22) Anmeldetag: 27.07.2023

(52) Gemeinsame Patentklassifikation (CPC):
G06T 11/005; G06T 2211/416; G06T 2211/424

(84) Benannte Vertragsstaaten:
AL AT BE BG CH CY CZ DE DK EE ES FI FR GB GR HR HU IE IS IT LI LT LU LV MC ME MK MT NL NO PL PT RO RS SE SI SK SM TR
Benannte Erstreckungsstaaten:
BA
Benannte Validierungsstaaten:
KH MA MD TN

(71) Anmelder: Medizinische Universität Graz Technologieverwertung
8010 Graz (AT)

(72) Erfinder: Simbrunner, Josef
8043 GRAZ (AT)

(74) Vertreter: Maiwald GmbH
Engineering
Elisenhof
Elisenstrasse 3
80335 München (DE)

(54) EFFIZIENTE ALGEBRAISCHE TOMOGRAPHISCHE REKONSTRUKTION DREIDIMENSIONALER OBJEKTE

(57) Verfahren (100) zum Ermitteln des Volumens (3b) von Anteilen (3) eines Voxels (2) in einer Probe (1), der von einem die Probe (1) durchdringenden Strahlbündel (4) erfasst wird, als Subvoxel, wobei das Strahlbündel (4) von einem Ausgangspunkt ausgeht und eine kegelförmige Geometrie aufweist, mit den Schritten:
• es wird eine Sammlung (5) geschlossener Formeln (5a) für die Berechnung von Volumina geometrischer Formen bereitgestellt (110);
• es werden Schnittpunkte und/oder Schnittlinien (4a) des Strahlbündels (4) mit den Grenzen des Voxels (2) ermittelt (120);
• anhand dieser Schnittpunkte und/oder Schnittlinien (4a) werden geometrische Formen (3a) der Subvoxel (3) ermittelt (130);
• für diese Formen (3a) wird geprüft (140), ob die Sammlung (5) eine geschlossene Formel (5a) für die Berechnung des Volumens (3b) der jeweiligen Form (3a) enthält;
• sofern die Sammlung (5) eine geschlossene Formel (5a) für die Berechnung des Volumens (3b) der jeweiligen Form (3a) enthält, wird mit dieser Formel (5a) das gesuchte Volumen (3b) ermittelt (150);
• sofern die Sammlung (5) eine solche geschlossene Formel (5a) nicht enthält, wird das gesuchte Volumen (3b) ermittelt (160), indem die Volumina (6b) von nicht vom Strahlbündel (4) erfassten Anteilen (6) des Voxels (2) ermittelt und vom Gesamtvolumen des Voxels (2) subtrahiert werden.

Fig. 4

EP 4 498 323 A1

**Beschreibung**

Die Erfindung betrifft die tomographische Rekonstruktion dreidimensionaler Objekte aus einer Vielzahl ein- oder zweidimensionaler Projektionen, die durch das Durchstrahlen des Objekts erhalten wurden.

Stand der Technik

In der Medizin, in der Materialprüfung sowie bei der Zutrittskontrolle zu sensiblen Sicherheitsbereichen werden Proben, d.h. Personen, Tiere, Werkstücke oder Gepäckstücke, tomographisch untersucht. Dazu wird eine durchdringende Strahlung aus vielen unterschiedlichen Perspektiven durch die Probe hindurch auf einen ein- oder zweidimensionalen Detektor gerichtet, so dass eine Projektion der Probe auf den Detektor erhalten wird. Aus einer Vielzahl solcher Projektionen wird die dreidimensionale innere Struktur der Probe rekonstruiert.

Für diese Rekonstruktion kommt hauptsächlich die Methode der gefilterten Rückprojektion (filtered back-propagation, FBP) zum Einsatz. Hierbei wird ausgenutzt, dass die innere Struktur der Probe einerseits und die Menge aller Projektionen andererseits durch die Radon-Transformation beschrieben wird und diese Transformation bijektiv ist. Es gibt also eine inverse Radon-Transformation, die von den Projektionen zurück zur inneren Struktur der Probe führt. Der Name "gefilterte Rückprojektion" rührt daher, dass in der inversen Radon-Transformation ein Faltungsintegral der Projektionen mit einem Hochpassfilter vorkommt.

Alternativ kann auch eine algebraische Rekonstruktionstechnik, ART, eingesetzt werden. Hierbei wird die Intensität, die von einem Detektorelement gemessen wird, als algebraische Summe der Beiträge von in einem Raster angeordneten Volumenelementen (Voxeln) der Probe aufgefasst, die die Strahlung auf ihrem Weg von der Strahlungsquelle zum Detektor durchdrungen hat. Unter der vereinfachenden Annahme, dass sich die exponentielle Abschwächung der Strahlung beim Durchgang durch die Probe auf dem kurzen Weg durch das jeweilige Voxel linearisieren lässt, entsteht für jeden Weg, auf dem die Strahlung die Probe durchdringt, eine lineare Gleichung der Form

$$\sum_{j=1}^{N} w_{ij}\mu_j = p_i.$$

Hierin ist $p_i$ der Intensitätswert der i-ten Projektion. N ist die Gesamtzahl der Voxel. $\mu_j$ ist der Abschwächungskoeffizient des j-ten Voxels, in dem die Information über das Material steckt, mit dem dieser Voxel gefüllt ist. $w_{ij}$ ist der Gewichtungskoeffizient der i-ten Projektion im Hinblick auf das j-te Voxel, also der Volumenanteil des $j$-ten Voxels, der vom i-ten Strahl erfasst wird. Es entsteht ein lineares Gleichungssystem, das nach den Abschwächungskoeffizienten $\mu_j$ aufgelöst werden kann.

Hierbei gibt es insgesamt M = $N_p \cdot N_d$ Projektionen, wobei $N_p$ die Anzahl aller verwendeten Orientierungen (etwa Winkelschritte) ist und $N_d$ die Anzahl aller verfügbaren Detektorelemente ist. Wenn $M > N$ ist, ist das Gleichungssystem überbestimmt. Es lässt sich theoretisch direkt lösen, sofern das Produkt $W^T W$ der Gewichtematrix $W$ mit ihrer Transponierten nicht singulär ist. In der Praxis werden jedoch typischerweise iterative Rekonstruktionstechniken verwendet.

Die Verwendung von ART hat gegenüber FBP verschiedene Vorteile. So kommt die ART in der Medizin mit einem Ausgangsmaterial an Projektionen aus, das einen Patienten mit einer geringeren Gesamtdosis belastet, und wird weniger durch Metallimplantate gestört. Auch andere Abweichungen von idealisierten Annahmen, wie etwa unregelmäßige Scanner-Geometrien, fehlende Daten, endliche Abmessungen von Detektoren und unterschiedlich empfindliche Detektoren, können besser berücksichtigt werden. Dies wird damit erkauft, dass die auch Systemmatrix genannte Gewichtematrix $W$ sehr groß ist. Sie ist typischerweise so groß, dass sie auf der verwendeten Hardwareplattform gar nicht vollständig abgespeichert werden kann. Somit wird immer dann, wenn ein Gewicht $w_{ij}$ aus dieser Matrix $W$ benötigt wird, dieses Gewicht $w_{ij}$ berechnet. Diese Berechnungen werden somit sehr häufig durchgeführt und sind ein bestimmender Faktor für die insgesamt für die Rekonstruktion erforderliche Rechenzeit.

Aufgabe und Lösung

Es ist daher die Aufgabe der vorliegenden Erfindung, ein Verfahren zur Verfügung zu stellen, mit dem die Gewichte $w_{ij}$ für die ART schneller berechnet werden können und somit die Auswertung von Projektionen mittels ART insgesamt beschleunigt werden kann.

Diese Aufgabe wird erfindungsgemäß gelöst durch ein Verfahren gemäß Hauptanspruch. Weitere vorteilhafte Ausgestaltungen ergeben sich aus den darauf rückbezogenen Unteransprüchen.

Offenbarung der Erfindung

Die Erfindung stellt ein Verfahren zum Ermitteln des Volumens von Anteilen eines Voxels in einer Probe, der von einem die Probe durchdringenden Strahlbündel erfasst wird, bereit. Anteile des Voxels, die von dem Strahlbündel erfasst werden, werden im Folgenden auch Subvoxel genannt. Das Verfahren geht davon aus, dass das Strahlbündel von einem Ausgangspunkt ausgeht und eine kegelförmige Geometrie aufweist.

Im Rahmen des Verfahrens wird eine Sammlung geschlossener Formeln für die Berechnung von Volumina geometrischer Formen bereitgestellt. Diese Formeln können sich insbesondere beispielsweise auf bestimmte Typen von Formen beziehen und mit Bezugspunkten oder anderen Kenngrößen dieser Formen parametrisiert sein. Beispielsweise kann die Formel für das Volumen eines Polyeders mit Koordinaten der Eckpunkte dieses Polyeders parametrisiert sein. Die Formel für das Volumen eines Kegels kann hingegen beispielsweise mit dem Kreisradius des Bodens und der Höhe parametrisiert sein.

Es werden Schnittpunkte und/oder Schnittlinien des Strahlbündels mit den Grenzen des Voxels ermittelt. Anhand dieser Schnittpunkte und/oder Schnittlinien werden geometrische Formen der Subvoxel ermittelt. Anschließend wird geprüft, ob die Sammlung eine geschlossene Formel für die Berechnung des Volumens der jeweiligen Form enthält.

Wenn die Sammlung eine geschlossene Formel für die Berechnung des Volumens der jeweiligen Form enthält, wird mit dieser Formel das gesuchte Volumen ermittelt.

Wenn hingegen die Sammlung eine solche geschlossene Formel nicht enthält, wird das gesuchte Volumen ermittelt, indem die Volumina von nicht vom Strahlbündel erfassten Anteilen des Voxels ermittelt und vom Gesamtvolumen des Voxels subtrahiert werden. Hierhinter steckt die Erkenntnis, dass das Volumen vieler scheinbar komplizierter Formen sich als die Differenz der Volumina zweier einfacher Formen ausdrücken lässt. So sind beispielsweise das Volumen eines Zylinders und das Volumen einer Pyramide jeweils einfach mit geschlossenen Formeln zu berechnen, und das Volumen eines Zylinders, an dem ein Stück in Form der Pyramide fehlt, ist die Differenz zwischen dem Volumen des Zylinders und dem Volumen der Pyramide. Es wäre aber gar nicht so einfach, den Zylinder mit der fehlenden Pyramide additiv aus Formen zusammenzubauen, deren Volumina mit geschlossenen Formeln berechenbar sind.

Es wurde erkannt, dass bei der Implementierung auf einem Computer die Berechnung des Volumens einer geometrischen Form mit einer für diese Form spezifischen geschlossenen Formel um Größenordnungen schneller abläuft als eine Berechnung dieses Volumens mit einem universellen Algorithmus, der nicht auf diese Form limitiert ist. Der Unterschied in den Geschwindigkeiten ist so groß, dass auch etwa die Berechnung mehrerer nicht vom Strahlbündel erfasster Anteile des Voxels immer noch deutlich schneller abläuft als die direkte Berechnung mit dem universellen Algorithmus.

Dabei handelt es sich nicht um eine näherungsweise Berechnung, wie sie vielfach verwendet wird, um Rechenzeit einzusparen. Es wird immer noch das gleiche exakte Ergebnis erzielt, wie es mit bisherigen Methoden in deutlich längerer Zeit erarbeitet wurde.

Eine deutliche Ersparnis an Rechenzeit ergibt sich insgesamt auch dann noch, wenn im Einzelfall ein vom Strahlbündel erfasster Anteil eines Voxels nicht hinreichend additiv und/oder subtraktiv durch Formen ausgedrückt werden kann, deren Volumen durch eine verfügbare geschlossene Formel berechenbar ist. Wenn bei den meisten im Verlauf einer tomographischen Rekonstruktion anfallenden Berechnungen von durch das Strahlbündel erfassten Volumina die hier vorgeschlagene Berechnung über geschlossene Formeln zum Erfolg führt, wird hierdurch insgesamt so viel Rechenzeit eingespart, dass es nicht wesentlich ins Gewicht fällt, wenn dieser Ansatz in einem geringen Anteil der Fälle erfolglos ist und in diesen Fällen auf bekannte, aber deutlich langsamere Algorithmen zurückgegriffen werden muss. Für die Geschwindigkeit, mit der eine tomographische Rekonstruktion als Ganzes abgeschlossen werden kann, kommt es also nicht darauf an, dass das hier vorgeschlagene Verfahren für jeden einzelnen Fall zum Erfolg führt und schneller ist. Vielmehr ist maßgeblich, dass die komplette To-Do-Liste aller im Verlauf dieser Rekonstruktion anfallenden Berechnungen erfasster Volumina insgesamt schneller abgearbeitet wird.

Dies lässt sich anhand einer einfachen Analogie veranschaulichen. Man stelle sich eine Qualitätskontrolle für in Serie gefertigte Werkstücke vor, bei der die Werkstücke bislang in ein Röntgengerät verbracht und die Röntgenbilder ausgewertet wurden. Nun wird eine neue Methode zur Verfügung gestellt, bei der das Werkstück durch einen Hammerschlag zu akustischen Schwingungen angeregt wird und aus dem Spektrum dieser Schwingungen auf die Qualität des Werkstücks geschlossen wird. Dies dauert nur wenige Sekunden, während der Umweg über das Röntgengerät bislang mehrere Minuten dauerte. Die meisten Werkstücke können mit der neuen Methode sicher klassifiziert werden, was jeweils massiv Zeit einspart. Bei einigen Werkstücken lässt die Analyse der akustischen Schwingungen jedoch keinen eindeutigen Rückschluss auf die Qualität zu, so dass doch wieder auf das Röntgengerät zurückgegriffen werden muss. In diesen Fällen hat der vorherige Einsatz der neuen Methode nur unnötige zusätzliche Zeit gekostet. Jedoch fällt dies angesichts der für die deutliche Mehrheit der Fälle erzielten gesammelten Zeitersparnis kaum ins Gewicht.

In einer besonders vorteilhaften Ausgestaltung wird das ursprüngliche Voxel in zwei Teile unterteilt. Für jeden dieser Teile werden jeweils erfasste Subvoxel bestimmt. Die so insgesamt bestimmten Subvoxel werden zu den gesuchten Subvoxeln des ursprünglichen Voxels vereinigt. Durch das Unterteilen können insbesondere beispielsweise erfasste Subvoxel in zwei Teile unterteilt werden, für die es einfacher ist, eine oder mehrere geschlossene Formeln für die Berechnung des Volumens zu finden. Wenn beispielsweise ein erfasster Subvoxel ein Quader ist, in dessen Boden und in dessen Deckel jeweils eine weitere Form fehlt, so kann dieser erfasste Subvoxel durch das Unterteilen des ursprünglichen Voxels mittig in zwei Quader unterteilt werden, wobei bei dem einen Quader in der Decke und im anderen Quader im Boden jeweils eine weitere Form fehlt. Für diese beiden Teile des Subvoxels ist die Volumenberechnung mit geschlossenen Formeln, hier: Differenz zwischen Volumen des Quaders und Volumen der darin fehlenden weiteren Form, einfacher auffindbar als für das Subvoxel insgesamt, also für den Quader mit zwei fehlenden Formen.

In einer weiteren besonders vorteilhaften Ausgestaltung wird mindestens ein nicht vom Strahlbündel erfasster Anteil des Voxels in mindestens zwei Teile zerlegt. Hierbei wird mindestens ein Teil so gewählt, dass die Sammlung für die Berechnung seines Volumens eine geschlossene Formel bereitstellt. Es wird dann das Volumen dieses mindestens einen Teils mit dieser geschlossenen Formel ermittelt. Auf diese Weise kann zumindest eine erste Näherung für den größten Teil des gesuchten Volumens sehr schnell erhalten werden. Das restliche fehlende Volumen kann dann beispielsweise mit einem herkömmlichen Algorithmus berechnet werden. Die Laufzeit eines solchen herkömmlichen Algorithmus kann von der Größe des zu ermittelnden Volumens abhängen. Wenn also der größte Teil des Volumens bereits mit einer geschlossenen Formel berechnet wurde, kann der verbleibende schwierigere, aber kleinere Teil auf herkömmlichem Wege schneller berechnet werden als das Volumen des erfassten Subvoxels insgesamt.

Dieses Prinzip lässt sich auch noch iterativ weiter fortsetzen. Daher wird in einer weiteren vorteilhaften Ausgestaltung ein bei der Zerlegung ermittelter Teil, dessen Volumen mit keiner geschlossenen Formel aus der Sammlung ermittelbar ist, wiederum in zwei Unterteile zerlegt. Hierbei wird mindestens ein Unterteil so gewählt, dass die Sammlung für die Berechnung seines Volumens eine geschlossene Formel bereitstellt. Es wird dann das Volumen dieses mindestens einen Unterteils wiederum mit dieser geschlossenen Formel ermittelt.

In einer weiteren besonders vorteilhaften Ausgestaltung enthält die Sammlung mindestens eine geschlossene Formel für die Berechnung des Volumens eines Polyeders. Dies sind diejenigen Formen, die bei Schnitten von sich geradlinig ausbreitenden Strahlbündeln mit quaderförmigen Voxeln am häufigsten auftreten. Die Formeln zur Berechnung der Volumina von Polyedern sind auch relativ einfach und somit auf einem Computer schnell abzuarbeiten. Ein Polyeder kann insbesondere beispielsweise eine Pyramide sein oder auch durch Extrusion eines Dreiecks oder Trapezoiden entstehen.

In einer besonders vorteilhaften Ausgestaltung werden die Schnittpunkte und/oder Schnittlinien des Strahlbündels mit den Grenzen des Voxels anhand

- der relativen Anordnung des Ausgangspunkts zum Voxel,
- einer in einer oder mehreren Winkeln gegebenen Ausbreitungsrichtung des Strahlbündels ausgehend vom Ausgangspunkt sowie
- eines Öffnungswinkels der kegelförmigen Geometrie des Strahlbündels ermittelt. Dies sind vergleichsweise einfache geometrische Berechnungen, die sich jeweils auch in geschlossenen Formeln ausdrücken lassen.

In einer weiteren besonders vorteilhaften Ausgestaltung wird mindestens ein mit einer geschlossenen Formel berechnetes Volumen einer geometrischen Form in einem Speicher abgelegt. Wenn die Berechnung des Volumens einer gleichen geometrischen Form ansteht, wird dieses Volumen wiederverwendet. Auf diese Weise kann insbesondere die erneute Berechnung eines Volumens nach einer komplizierten Formel, deren Auswertung in Form von Rechenzeit "teuer" ist, durch einen einfachen Speicherzugriff ersetzt werden.

Wie zuvor erläutert, ist das mit dem Ermitteln der erfassten Subvoxel letztendlich verfolgte Ziel, die tomographische Rekonstruktion der inneren Struktur der Probe zu beschleunigen. Daher werden in einer weiteren besonders vorteilhaften Ausgestaltung Volumina der Anteile aller Voxel, die von einem die Probe durchdringenden Strahlbündel erfasst werden, ermittelt. Es wird dann eine Gleichung aufgestellt, die eine mit diesen Volumina gewichtete Summe von Abschwächungskoeffizienten von Voxeln in Beziehung setzt zu einer nach dem Durchdringen der Probe mit einem Detektor gemessenen Intensität des Strahlbündels. Dies ist die Grundlage für eine schnellere tomographische Rekonstruktion mit algebraischer Rekonstruktionstechnik, ART.

Zu diesem Zweck kann insbesondere beispielsweise eine Vielzahl von Gleichungen für Strahlbündel, die die Probe auf unterschiedlichen Wegen durchdringen, zu einem Gleichungssystem kombiniert werden. Das Gleichungssystem kann dann nach den Abschwächungskoeffizienten der Voxel gelöst werden. Wie zuvor erläutert, geben diese Abschwächungskoeffizienten Auskunft über das im jeweiligen Voxel der Probe enthaltene Material. Insbesondere gibt es in der Rekonstruktion einen Kontrast zwischen verschiedenen Materialien, der als Abbild der inneren Struktur der Probe visualisiert werden kann.

In einer besonders vorteilhaften Ausgestaltung wird mindestens ein Teil der Gleichungen für Strahlbündel aufgestellt, die die Probe auf zueinander rotierten und/oder translatorisch versetzten Wegen durchdringen. Auf diese Weise kann sichergestellt werden, dass sich die Mengen an Voxeln, die zu den einzelnen Gleichungen beitragen, zumindest teilweise überlappen, so dass bezüglich jedes einzelnen Voxels eine Aussage aus dem Zusammenspiel jeweils mehrerer Gleichungen getroffen werden kann. Wenn hingegen beispielsweise eine kleine Untergruppe der Gleichungen nur Beiträge einiger weniger Voxel enthält und diese Voxel zu den restlichen Gleichungen des Gleichungssystems keinen Beitrag leisten, kann nur diese kleine Untergruppe der Gleichungen genutzt werden, um die gesuchten Abschwächungskoeffizienten für diese Voxel zu ermitteln. Der ganze große Rest des Gleichungssystems kann hierbei nicht helfen. Idealerweise durchdringen die Strahlbündel die Probe auf spiralförmig, d.h. sowohl zueinander rotierten als auch zueinander versetzten, Wegen. Hierher rührt der Begriff "Traumaspirale" für eine tomographische Ganzkörper-Untersuchung, die insbesondere in Form eines Röntgen-CT wegen der hohen Strahlenbelastung vor allem in Notfällen angewendet wird.

In einer weiteren besonders vorteilhaften Ausgestaltung wird das Gleichungssystem mit einem iterativen numerischen Lösungsverfahren gelöst. Anders als beispielsweise das direkte Lösen der Matrix-Gleichung

$$W \cdot \mu = p$$

nach dem Vektor $\mu$ der Abschwächungskoeffizienten gemäß

$$\mu = (W^T W)^{-1} \cdot W^T \cdot p$$

mit der Moore-Penrose-Pseudoinversen $(W^T W)^{-1} \cdot W^T$ kann der Prozess des iterativen Lösens besser kontrolliert und ggfs. fortwährend überwacht werden, so dass insbesondere beispielsweise Artefakte, die durch die Verstärkung des in realen Messdaten immer enthaltenen Rauschens entstehen können, besser unterdrückt werden können.

In einer weiteren besonders vorteilhaften Ausgestaltung wird ein Detektor mit einer ebenen oder ringförmigen für das Strahlbündel sensitiven Fläche gewählt. Die Berechnung, welche Anteile eines Voxels einer Probe von demjenigen Anteil eines Strahlbündels mit kegelförmiger Geometrie erfasst werden, der später auch das jeweilige Detektorelement erreicht, führt für diese Detektorgeometrien auf besonders einfache geschlossene Formeln.

In einer weiteren besonders vorteilhaften Ausgestaltung wird die Probe mit dem oder den Strahlbündeln aus einer Strahlungsquelle beaufschlagt. Die Strahlungsquelle kann insbesondere beispielsweise eine Röntgenquelle sein. Wenn beispielsweise in einer Röntgenröhre Elektronen durch eine Hochspannung auf ein Target beschleunigt werden, werden Röntgenstrahlung in der im Rahmen des hier vorgeschlagenen Verfahrens angenommenen kegelförmigen Geometrie emittiert. Die Intensität des Strahlbündels nach dem Durchdringen der Probe wird mit mindestens einem Detektor registriert. Damit ist die Wirkkette von der Aufnahme der Rohdaten an der Probe über das Ermitteln der von der Strahlung jeweils erfassten Subvoxel eines jeden Voxels bis hin zur tomographischen Rekonstruktion geschlossen.

Das Verfahren kann insbesondere computerimplementiert ablaufen und somit in Form einer Software verkörpert vorliegen. Die Erfindung bezieht sich daher auch auf ein Computerprogramm, enthaltend maschinenlesbare Anweisungen, die, wenn sie auf einem oder mehreren Computern und/oder Compute-Instanzen ausgeführt werden, den oder die Computer und/oder Compute-Instanzen dazu veranlassen, das zuvor beschriebene Verfahren auszuführen. In diesem Zusammenhang sind insbesondere beispielsweise auch Steuergeräte von Röntgengeräten und/oder Tomographen, sowie andere Embedded-Systeme, die zur Ausführung maschinenlesbarer Anweisungen in der Lage sind, als Computer anzusehen. Compute-Instanzen sind virtuelle Maschinen, Container oder andere Ausführungsumgebungen, über die in einer öffentlichen oder privaten Cloud Rechenleistung für die Ausführung maschinenlesbarer Anweisungen bereitgestellt wird.

Die Erfindung bezieht sich ebenso auf einen maschinenlesbaren Datenträger und/oder ein Downloadprodukt mit dem Computerprogramm. Ein Downloadprodukt ist ein digitales Gut, das das Computerprogramm enthält und insbesondere in einem Online-Shop zur sofortigen Lieferung per Download feilgeboten werden kann. Weiterhin können auch ein oder mehrere Computer und/oder Compute-Instanzen mit dem Computerprogramm, mit dem maschinenlesbaren Datenträger, und/oder mit dem Downloadprodukt, ausgestattet sein.

Spezieller Beschreibungsteil

Nachfolgend wird der Gegenstand der Erfindung anhand von Figuren erläutert, ohne dass der Gegenstand der Erfindung hierdurch beschränkt wird. Es ist gezeigt:

Figur 1: Ausführungsbeispiel des Verfahrens 100 zum Ermitteln des Volumens 3b von Anteilen 3 eines Voxels 2, die von einem Strahlbündel 4 erfasst werden;

Figur 2: Veranschaulichung der Nutzung der Sammlung 5 geschlossener Formeln 5a im Rahmen des Verfahrens 100 anhand einfacher Beispiele;

Figur 3: Schematische Unterteilung eines Pixels durch die Strahlen $g_1$, $g_2$, $g_3$ und $g_4$ durch die Kanten $V_1$, $V_2$, $V_3$ bzw. $V_4$;

Figur 4: verschiedene Fälle des Beitrags eines Subvoxels 3 zu einem Detektorelement;

Figur 5: Bestimmung des Volumens von Subvoxeln, die zu einem Detektorelement beitragen, durch geeignete Segmentierung;

Figur 6: Integration der Gewichtungskoeffizienten für die jeweiligen Detektorelemente D1 bis D6 für ein einzelnes Voxel 2;

Figur 7: Berücksichtigung blinder Flecken B1, B2 zwischen Detektorelementen D1, D2 und D3 bei der Auswertung.

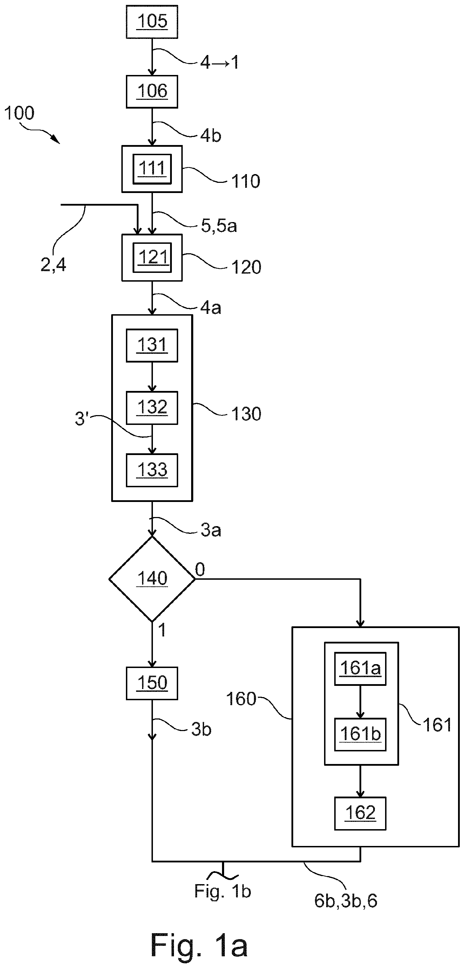

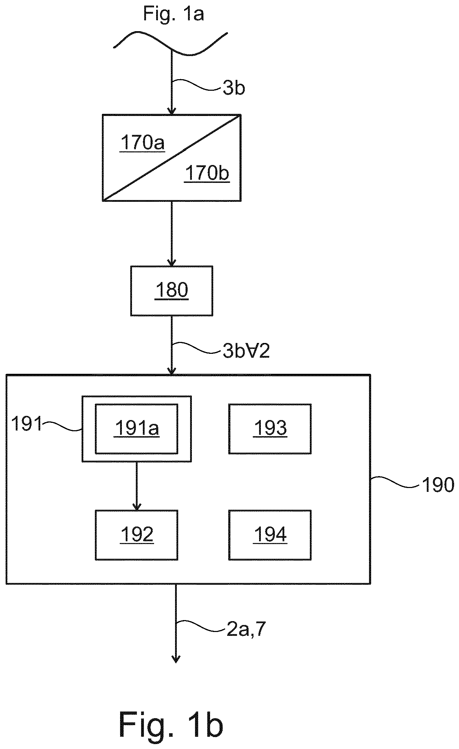

Figur 1 ist ein schematisches Ablaufdiagramm eines Ausführungsbeispiels des Verfahrens 100 zum Ermitteln des Volumens 3b von Anteilen 3 eines Voxels 2 in einer Probe 1, der von einem die Probe 1 durchdringenden Strahlbündel 4 erfasst wird, als Subvoxel. Das Strahlbündel 4 geht von einem Ausgangspunkt aus und weist eine kegelförmige Geometrie auf.

In Schritt 110 wird eine Sammlung 5 geschlossener Formeln 5a für die Berechnung von Volumina geometrischer Formen bereitgestellt.

Gemäß Block 111 kann diese Sammlung 5 mindestens eine geschlossene Formel 5a für die Berechnung des Volumens eines Polyeders enthalten.

In Schritt 120 werden Schnittpunkte und/oder Schnittlinien 4a des Strahlbündels 4 mit den Grenzen des Voxels 2 ermittelt.

Gemäß Block 121 können die Schnittpunkte und/oder Schnittlinien 4a des Strahlbündels 4 mit den Grenzen des Voxels 2 anhand

- der relativen Anordnung des Ausgangspunkts zum Voxel 2,
- einer in einer oder mehreren Winkeln gegebenen Ausbreitungsrichtung des Strahlbündels 4 ausgehend vom Ausgangspunkt sowie
- eines Öffnungswinkels der kegelförmigen Geometrie des Strahlbündels 4 ermittelt werden.

In Schritt 130 werden anhand dieser Schnittpunkte und/oder Schnittlinien 4a werden geometrische Formen 3a der Subvoxel 3 ermittelt.

Hierzu kann insbesondere beispielsweise gemäß Block 131 das ursprüngliche Voxel 2 in zwei Teile unterteilt werden. Es können dann gemäß Block 132 für jeden dieser Teile jeweils erfasste Subvoxel 3' bestimmt werden. Die so insgesamt bestimmten Subvoxel 3' können gemäß Block 133 zu den gesuchten Subvoxeln 3 des ursprünglichen Voxels 2 vereinigt werden.

In Schritt 140 wird für die zuvor ermittelten Formen 3a geprüft, ob die Sammlung 5 eine geschlossene Formel 5a für die Berechnung des Volumens 3b der jeweiligen Form 3a enthält. Ist dies der Fall (Wahrheitswert 1), wird in Schritt 150 mit dieser Formel 5a das gesuchte Volumen 3b ermittelt. Ist hingegen keine geschlossene Formel 5a für die Form 3a vorhanden (Wahrheitswert 0), wird in Schritt 160 das gesuchte Volumen 3b ermittel, indem die Volumina 6b von nicht vom Strahlbündel 4 erfassten Anteilen 6 des Voxels 2 ermittelt und vom Gesamtvolumen des Voxels 2 subtrahiert werden.

Gemäß Block 161 kann mindestens ein nicht vom Strahlbündel 4 erfasster Anteil 6 des Voxels in mindestens zwei Teile zerlegt werden. Hierbei wird mindestens ein Teil so gewählt, dass die Sammlung 5 für die Berechnung seines Volumens 6b eine geschlossene Formel 5a bereitstellt. Es kann dann gemäß Block 162 das Volumen 6b dieses mindestens einen Teils mit dieser geschlossenen Formel 5a ermittelt werden.

Dies lässt sich iterativ noch weiter schachteln, indem gemäß Block 161a ein bei der Zerlegung ermittelter Teil, dessen Volumen 6b mit keiner geschlossenen Formel 5a aus der Sammlung 5 ermittelbar ist, wiederum in zwei Unterteile zerlegt wird. Dabei wird mindestens ein Unterteil so gewählt, dass die Sammlung 5 für die Berechnung seines Volumens eine geschlossene Formel 5a bereitstellt. Gemäß Block 161b kann dann das Volumen dieses mindestens einen Unterteils mit dieser geschlossenen Formel 5a ermittelt werden.

In Schritt 170a kann mindestens ein mit einer geschlossenen Formel 5a berechnetes Volumen einer geometrischen Form in einem Speicher abgelegt werden. Es kann dann in Schritt 170b wiederverwendet werden, wann immer die Berechnung des Volumens einer gleichen geometrischen Form ansteht.

In dem in Figur 1 gezeigten Beispiel werden in Schritt 180 Volumina 3b der Anteile 3 aller Voxel 2, die von einem die Probe 1 durchdringenden Strahlbündel erfasst 4 werden, ermittelt. Es wird dann in Schritt 190 mindestens eine Gleichung 7 aufgestellt, die eine mit diesen Volumina 3b gewichtete Summe von Abschwächungskoeffizienten 2a von Voxeln 2 in Beziehung setzt zu einer nach dem Durchdringen der Probe 1 mit einem Detektor gemessenen Intensität 4b des Strahlbündels 4.

Gemäß Block 191 kann eine Vielzahl von Gleichungen 7 für Strahlbündel 4, die die Probe 1 auf unterschiedlichen Wegen durchdringen, zu einem Gleichungssystem kombiniert werden. Dieses Gleichungssystem wird gemäß Block 192 nach den Abschwächungskoeffizienten 2a der Voxel 2 gelöst.

Hierbei kann insbesondere beispielsweise gemäß 191a mindestens ein Teil der Gleichungen 7 für Strahlbündel 4 aufgestellt werden, die die Probe 1 auf zueinander rotierten und/oder translatorisch versetzten Wegen durchdringen.

Gemäß Block 193 kann das Gleichungssystem mit einem iterativen numerischen Lösungsverfahren gelöst werden.

Gemäß Block 194 kann insbesondere beispielsweise ein Detektor mit einer ebenen oder ringförmigen für das Strahlbündel sensitiven Fläche gewählt werden.

In dem in Figur 1 gezeigten Beispiel wird in Schritt 105 die Probe 1 mit dem oder den Strahlbündeln aus einer Strahlungsquelle beaufschlagt. In Schritt 106 wird die Intensität 4b des Strahlenbündels 4 nach dem Durchdringen der Probe 1 mit mindestens einem Detektor registriert. Diese Schritt können auch beispielsweise erst nach dem Ermitteln der Volumina 3b und vor dem Lösen des Gleichungssystems 7 durchgeführt werden. Das heißt, die Bestrahlung der Probe 1 kann einem genauen Plan folgen, für den die wesentliche Vorarbeit zur Auswertung schon geleistet ist.

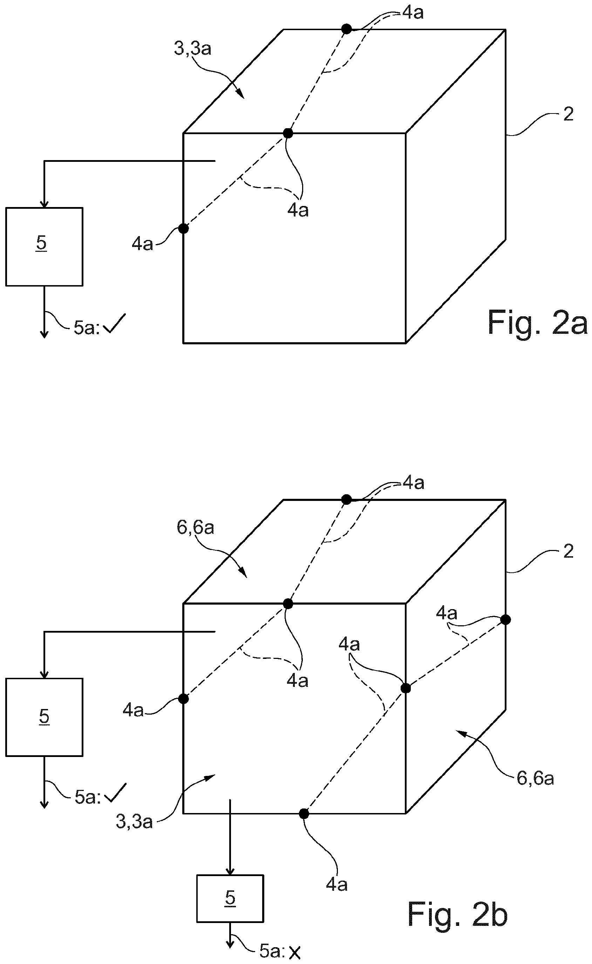

Figur 2 veranschaulicht anhand zweier einfacher (frei gewählter) exemplarischer Beispiele, wie die Sammlung 5 geschlossener Formeln 5a zur schnelleren Berechnung der Volumina 3b von Subvoxeln 3 beitragen kann. Eingezeichnet sind jeweils Schnittpunkte und/oder Schnittlinien 4a des Strahlbündels 4 mit dem Voxel 2.

In dem in Figur 2a gezeigten Beispiel befindet sich der Anteil 3 des Voxels 2, der von dem Strahlbündel 4 erfasst wird, in der linken oberen Ecke der dem Betrachter zugewandten Vorderseite des Voxels 2. Die geometrische Form 3a dieses Anteils 3 ist ein Dreieckszylinder, also ein in die Zeichenebene hinein extrudiertes Dreieck. Für die Berechnung des Volumens 3b dieser geometrischen Form 3a enthält die Sammlung 5 eine passende geschlossene Formel 5a.

In dem in Figur 2b gezeigten Beispiel wird umgekehrt ein zentraler Bereich 3 des Voxels 2, der von zwei nicht erfassten Dreieckszylindern 6, 6a begrenzt wird, vom Strahlbündel 4 erfasst. Für die Form 3a dieses zentralen Bereichs 3 enthält die Sammlung 5 keine passende geschlossene Formel 5a. Die Sammlung 5 enthält hingegen eine passende geschlossene Formel 5a für die Berechnung der Volumina 6b der Dreieckszylinder 6a. Indem diese Volumina 6b vom Gesamtvolumen des Voxels 2 abgezogen werden, kann das gesuchte Volumen 3a des zentralen Bereichs 3 ermittelt werden.

Im Folgenden wird eine beispielhafte mathematische Herleitung von geschlossenen Formeln für die Berechnung der Volumina von geometrischen Formen, die am häufigsten als vom Strahlbündel erfasste Subvoxel bzw. als nicht vom Strahlbünde erfasste Anteile eines Voxels vorkommen, angegeben.

Diese Herleitung geht davon aus, dass der Intensitätswert $p_i$ der i-ten Projektion, der Abschwächungskoeffizient $\mu_j$ des j-ten Voxels sowie der Gewichtungskoeffizient $w_{ij}$ der i-ten Projektion im Hinblick auf das j-te Voxel über

$$\sum_{j=1}^{N} w_{ij}\mu_j = p_i \tag{1}$$

miteinander verknüpft sind. Jeder Gewichtungskoeffizient ist das Verhältnis des vom Strahlbündel erfassten Subvoxel-Volumens $S_j$ des Voxels $j$ zum Gesamtvolumen $V_j$ dieses Voxels j:

$$w_{ij} = S_j \big/ V_j. \tag{2}$$

Herleitung für einen Flachdetektor

Das verwendete kartesische System hat seinen Ursprung im Zentrum des dreidimensionalen Voxelgitters. Wie in praktisch umgesetzten Rekonstruktionsverfahren üblich, wird die Röntgenquelle S als Punkt mit der Koordinate s = (S, 0, 0) angenommen, wobei S der Abstand vom Gitterzentrum ist. Im Falle eines Flachdetektors sind die quadratischen Detektoreinheiten durch die Seiten $d_y$ und $d_z$ in y- bzw. z-Richtung gekennzeichnet. Die Pixelreaktion des Detektors wird als gleichmäßig angenommen. Der Abstand des Detektors vom Ursprung des Koordinatensystems auf der gegenüberliegenden Seite der Quelle S in der *x-Achse* wird als *D* angegeben. Dann kann ein Vektor **d** einem Punkt am Rand eines Detektorelements als **d** = (-D, $m_y d_y$, $m_z d_z$)$^T$ zugeordnet werden, wobei $m_y$ und $m_z$ ganze Zahlen sind. Eine Trajektorie von S zum Detektorpunkt **d** kann durch den Vektor **d$_s$** dargestellt werden.

Bei einer Drehung der Röntgenquelle und des Detektors um den Winkel $\varphi$ gegen den Uhrzeigersinn um die *z-Achse* (wie bei der Computertomographie des menschlichen Körpers), was einer Drehung der Probe im Uhrzeigersinn in einem festen Röhren-Detektor-System entspricht, kann **d$_s$** wie folgt geschrieben werden

$$\mathbf{d_s} = \begin{pmatrix} S\cos\varphi \\ S\sin\varphi \\ 0 \end{pmatrix} + \lambda \begin{pmatrix} (S+D)\cos\varphi + m_y d_y \sin\varphi \\ (S+D)\sin\varphi - m_y d_y \cos\varphi \\ -m_z d_z \end{pmatrix} \tag{3}$$

wobei $\lambda$ eine reelle Zahl ist. Gleichung (3) kann auch geschrieben werden als

$$\mathbf{d_s} = \begin{pmatrix} S\cos\varphi \\ S\sin\varphi \\ 0 \end{pmatrix} + \lambda \begin{pmatrix} L\cos(\varphi - \beta_m) \\ L\sin(\varphi - \beta_m) \\ -m_z d_z \end{pmatrix} \tag{4}$$

wobei

$$\tan\beta_m = m_y d_y/(S+D) \quad \text{und} \tag{5}$$

$$L_m = \sqrt{(S+D)^2 + m_y^2 d_y^2} = (S+D)/\cos\beta_m. \tag{6}$$

Der Vektor $\mathbf{d_s}$ und ein Vektor von S zum Zentrum des Detektors schließen also den Winkel $\beta_m$ ein.

Daraus lässt sich schließen, dass für einen beliebigen Punkt $(x,y,z)$ entlang eines Strahlweges mit dem Winkel $\beta$ die folgenden Beziehungen gültig sind:

$$z = \frac{m_z d_z}{S+D} \frac{\cos\beta}{\cos(\varphi-\beta)} (S\cos\varphi - x) = \frac{m_z d_z}{S+D} \frac{\cos\beta}{\sin(\varphi-\beta)} (S\sin\varphi - y), \tag{7}$$

$$z = [(S\cos\varphi - x)\cos\varphi + (S\sin\varphi - y)\sin\varphi]\frac{m_z d_z}{S+D} = (S - x\cos\varphi -$$

$$y\sin\varphi)\frac{m_z d_z}{S+D} \tag{8}$$

$$x = S\cos\varphi + \frac{1}{\cos\varphi}\left[(S\sin\varphi - y)\sin\varphi - \frac{S+D}{m_z d_z}z\right], \tag{9}$$

$$y = S\sin\varphi + \frac{1}{\sin\varphi}\left[(S\cos\varphi - x)\cos\varphi - \frac{S+D}{m_z d_z}z\right], \tag{10}$$

$$x = -S\frac{\sin\beta}{\sin(\varphi-\beta)} + y\cot(\varphi - \beta) = S\cos\varphi - (S\sin\varphi - y)\cot(\varphi - \beta), \tag{11}$$

$$y = S\frac{\sin\beta}{\cos(\varphi-\beta)} + x\tan(\varphi - \beta) = S\sin\varphi - (S\cos\varphi - x)\tan(\varphi - \beta) \quad \text{und} \tag{12}$$

$$\tan(\varphi - \beta) = \frac{S\sin\varphi - y}{S\cos\varphi - x}. \tag{13}$$

Aus Gleichung (11) lässt sich der folgende Ausdruck ableiten:

$$\tan\beta = \frac{y\cos\varphi - x\sin\varphi}{S - x\cos\varphi - y\sin\varphi}. \tag{14}$$

Die Gleichungen (11) bis (14) gelten für jeden Strahlweg mit dem Winkel $\beta$.

Zweidimensionaler Fall: XY-Ebene

Sei zunächst z = 0. Für die folgende Analyse ist es günstig, die Winkel $\beta_g$, $\beta_{2g}$, $\beta_{3g}$ und $\beta_{4g}$ den vier Kanten $V_1 = ((n_x+1)a, n_y b)^T$, $V_2 = (n_x a, n_y b)^T$, $V_3 = (n_x a, (n_y+1)b)^T$ und $V_4 = ((n_x+1)a, (n_y+1)b)^T$ zuzuordnen, wobei $a$ und $b$ die Seiten des Pixels sind. Aus Gleichung (14) lassen sich die folgenden Beziehungen ableiten:

$$\tan \beta_g = \frac{n_y b \cos \varphi - (n_x+1)a \sin \varphi}{S - n_y b \sin \varphi - (n_x+1)a \cos \varphi}, \qquad (15)$$

$$\tan \beta_{2g} = \frac{n_y b \cos \varphi - n_x a \sin \varphi}{S - n_y b \sin \varphi - n_x a \cos \varphi}, \qquad (16)$$

$$\tan \beta_{3g} = \frac{(n_y+1)b \cos \varphi - n_x a \sin \varphi}{S - (n_y+1)b \sin \varphi - n_x a \cos \varphi} \quad \text{und} \qquad (17)$$

$$\tan \beta_{4g} = \frac{(n_y+1)b \cos \varphi - (n_x+1)a \sin \varphi}{S - (n_y+1)b \sin \varphi - (n_x+1)a \cos \varphi}. \qquad (18)$$

Aus Gleichung (13) lässt sich der folgende Ausdruck ableiten:

$$\cot(\varphi - \beta_{2g}) - \cot(\varphi - \beta_g) = \frac{S \cos \varphi - n_x a}{S \sin \varphi - n_y b} - \frac{S \cos \varphi - a(n_x+1)}{S \sin \varphi - n_y b} = \frac{a}{S \sin \varphi - n_y b}. \qquad (19)$$

Daraus ergibt sich die folgende Beziehung:

$$S \sin \varphi - n_y b = a \frac{\sin(\varphi - \beta_g) \sin(\varphi - \beta_{2g})}{\sin(\beta_{2g} - \beta_g)}.$$

$$(20)$$

Kombiniert man die Gleichungen (19) und (20), so erhält man:

$$S \cos \varphi - n_x a = a \frac{\sin(\varphi - \beta_g) \cos(\varphi - \beta_{2g})}{\sin(\beta_{2g} - \beta_g)}, \qquad (21)$$

$$S \cos \varphi - (n_x + 1)a = a \frac{\cos(\varphi - \beta_g) \sin(\varphi - \beta_{2g})}{\sin(\beta_{2g} - \beta_g)}. \qquad (22)$$

Der Winkel $\beta_i$ des Strahlwegs von der Quelle S bis zum i-ten Schnittpunkt der Detektorelemente kann berechnet werden aus:

$$\tan \beta_i = m_{yi} d_y / (S + D).$$

$$(23)$$

Die ganzen Zahlen $m_{yi}$ lassen sich aus den folgenden Beziehungen ableiten:

$$\left[\tan\left(\min(\beta_g, \beta_{2g})\right)\frac{S+D}{d_y}\right]_{integer} < m_{yi} \leq \left[\tan\left(\max(\beta_{3g}, \beta_{4g})\right)\frac{S+D}{d_y}\right]_{integer},$$

$$(24)$$

wobei $[x]_{integer}$ eine ganze Zahl ist, die unmittelbar kleiner als *x ist*. Es kann angenommen werden, dass $\max(\beta_g, \beta_{2g}) \leq \min(\beta_{3g}, \beta_{4g})$. Zu diesem Zweck wird die vierfache Symmetrie der rechteckigen oder quadratischen Pixel in Bezug auf den 360°-Umfang verwendet:

$$(1)\ [n_x a, (n_x + 1)a, n_y b, (n_y +1)b] \to (2)\ [n_y b, (n_y + 1)b, \text{-}n_x a, \text{-}(n_x + 1)a] \to$$

$$(3)\ [\text{-}(n_x + 1)a, \text{-}n_x a, \text{-}(n_y + 1)b, \text{-}n_y b] \to (4)\ [\text{-}(n_y +1)b, \text{-}n_y b, n_x a, (n_x + 1)a].$$

Hierbei müssen im zweiten und vierten Fall die Seiten *a* und *b* be vertauscht werden. Zur Berechnung der Beiträge der Pixel zu jedem Detektorelement, das von einem Strahl getroffen werden kann, müssen die Beziehungen zwischen den Winkeln $\beta_i$ und $\beta_g$ s bestimmt werden. Die daraus resultierenden Flächenelemente können direkt oder durch die positive oder negative Kombination von zwei oder drei Flächenelementen berechnet werden. Dazu genügen die Formeln von zwei Flächenelementen: einem Dreieck und einem Trapez. Das Dreieck wird durch eine Ecke des Pixels und einen Strahl zu einem Detektorschnittpunkt begrenzt. Das Trapez wird durch zwei Trajektorien begrenzt, die zwei gegenüberliegende Pixelseiten schneiden.

Dreieck in der XY-Ebene

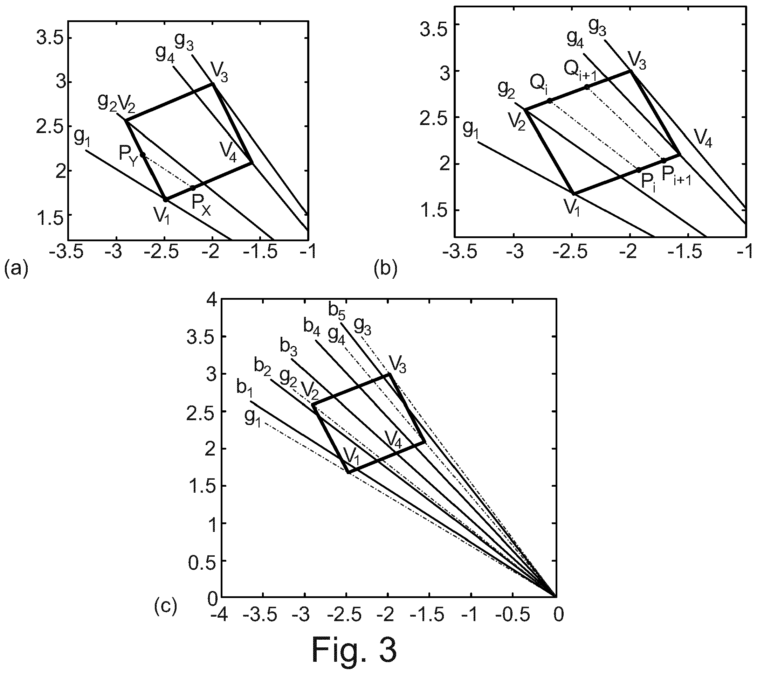

Figur 3 zeigt beispielhaft die schematische Unterteilung eines Pixels durch die Strahlen $g_1$, $g_2$, $g_3$ und $g_4$ durch die Kanten $V_1$, $V_2$, $V_3$ bzw. $V_4$. (a) Strahlen durch $V_1$ und innerhalb von $g_2$ begrenzen ein Dreieck (V P $P_{1XY}$). (b) Die Strahlen zwischen $g_2$ und $g_4$ begrenzen ein Trapez (P P $Q_{ii}+_{1i}+_{1i}$) Q. (c) Die Linien bi bis $b_5$ stellen Trajektorien zu den Kanten der Detektorelemente dar, die Subvoxel abgrenzen, die zu den jeweiligen Detektorelementen beitragen.

In der folgenden Herleitung wird davon ausgegangen, dass das Dreieck durch die Ecke $V_1$ des Pixels und die Schnittpunkte des i-ten Strahlwegs mit den umschließenden Seiten dieser Ecke begrenzt wird, die als $P_x$ und $P_y$ zugeordnet werden können (siehe Figur 3a). Unter Verwendung der Gleichungen (11) und (12) können die entsprechenden Vektoren wie folgt geschrieben werden:

$$\mathbf{v_1} = \begin{pmatrix} (n_x + 1)a \\ n_y b \end{pmatrix}, \tag{25}$$

$$\mathbf{p_x} = \begin{pmatrix} (n_x + 1)a \\ S \sin\varphi - (S\cos\varphi - (n_x + 1)a)\tan(\varphi - \beta_i) \end{pmatrix} \text{ und} \tag{26}$$

$$\mathbf{p_y} = \begin{pmatrix} S \cos\varphi - (S\sin\varphi - n_y b)\cot(\varphi - \beta_i) \\ n_y b \end{pmatrix} \tag{27}$$

Mit Hilfe der Gleichungen (22) und (20) lassen sich die beiden Seiten des erhaltenen rechtwinkligen Dreiecks wie folgt berechnen:

$$|\mathbf{p_x} - \mathbf{v_1}| = a \left| \frac{\sin(\varphi - \beta_{2g})\sin(\beta_i - \beta_g)}{\sin(\beta_{2g} - \beta_g)\cos(\varphi - \beta_i)} \right| \text{ und} \tag{28}$$

$$|\mathbf{v_1} - \mathbf{p_y}| = a \left| \frac{\sin(\varphi - \beta_{2g})\sin(\beta_i - \beta_g)}{\sin(\beta_{2g} - \beta_g)\sin(\varphi - \beta_i)} \right|. \tag{29}$$

Die sich daraus ergebende Fläche $A_{tri}$ lässt sich daher wie folgt beschreiben:

$$A_{tri}(\varphi, \beta_g, \beta_{2g}, \beta_i) = \frac{a^2}{|\sin(2\varphi - 2\beta_i)|} \left( \frac{\sin(\varphi - \beta_{2g})\sin(\beta_i - \beta_g)}{\sin(\beta_{2g} - \beta_g)} \right)^2. \tag{30}$$

Da die Fläche des rechteckigen Pixels *ab* ist, ist der relative Flächenfaktor:

$$A_{3rel}(\varphi, \beta_g, \beta_{2g}, \beta_i) = \frac{a}{b} \frac{1}{|\sin(2\varphi - 2\beta_i)|} \left( \frac{\sin(\varphi - \beta_{2g})\sin(\beta_i - \beta_g)}{\sin(\beta_{2g} - \beta_g)} \right)^2 \tag{31}$$

Trapez in der XY-Ebene

Wenn der i-te und der (i-1)-te Strahlweg zwei gegenüberliegende Seiten des Pixels schneiden, entsteht ein Trapez. Die Schnittpunkte können als Pi, Pi+i , Q$_i$ und Qi+i bezeichnet werden (siehe Figur 3b). Da die Höhe des Trapezes *a* ist, kann die Fläche $A_{tra}$ wie folgt ausgedrückt werden

$$A_{tra} = a \frac{|\mathbf{p}_{i+1} - \mathbf{p}_i| + |\mathbf{q}_{i+1} - \mathbf{q}_i|}{2} = \left| a(S \cos \varphi - \left( n_x + \frac{1}{2} \right) a)[\tan(\varphi - \beta_i) - \tan(\varphi - \beta_{i+1})] \right|. \tag{32}$$

Dann ist der relative Flächenfaktor:

$$A_{4rel}(\varphi, n_x, \beta_i, \beta_{i+1}) = \frac{1}{b} \left| a(S \cos \varphi - \left( n_x + \frac{1}{2} \right) a)[\tan(\varphi - \beta_i) - \tan(\varphi - \beta_{i+1})] \right|. \tag{33}$$

Unter Verwendung der Gleichungen (21) und (22) kann Gleichung (32) wie folgt geschrieben werden:

$$A_{tra}(\varphi, \beta_g, \beta_{2g}, \beta_i, \beta_{i+1}) = a^2 \left| \frac{\sin(2\varphi - \beta_g - \beta_{2g})}{2\sin(\beta_{2g} - \beta_g)} [\tan(\varphi - \beta_i) - \tan(\varphi - \beta_{i+1})] \right|. \tag{34}$$

Flächenfaktoren

Bei der Bestimmung der Gewichtungskoeffizienten müssen die Beziehungen zwischen den Winkeln $\beta_i$ und $\beta_g$ s berücksichtigt werden. Zu diesem Zweck werden in einem ersten Schritt die Winkel $\beta_g$ s nach ihren Beträgen sortiert. Dabei können zwei Fälle unterschieden werden: $\beta_g > \beta_{2g}$ und $\beta_g < \beta_{2g}$. Dies kann durch die Einführung der Winkel $\beta_G = min(\beta_g, \beta_{2g})$ und $\beta_{2G} = max(\beta_g, \beta_{2g})$ erreicht werden. Analog dazu ist $\beta_{3G} = min(\beta_{3g}, \beta_{4g})$ *und* $\beta_{4G} = max(\beta_{3g}, \beta_{4g})$. Man beachte, dass für quadratische Pixel $\beta_g \leq \beta_{2g} \leq \beta_{4g} \leq \beta_{3g}$ oder $\beta_{2g} \leq \beta_g \leq \beta_{3g} \leq \beta_{4g}$. Die von den Winkeln $\beta_{2G}$ und $\beta_{3G}$ aufgespannten Linien teilen das Pixel in drei Teile: zwei Dreiecke, die ein Trapez einschließen. Die Strahlen mit den Winkeln $\beta_i$ können diesen drei Unterzellen entsprechend ihren Größenordnungen zugeordnet werden, so dass für das erste Dreieck $\beta_G \leq \beta_i \leq \beta_{2G}$, für das Trapez $\beta_{2G} < \beta_i \leq \beta_{3G}$ und für das zweite Dreieck $\beta_{3G} < \beta_i \leq \beta_{4G}$.

Unter Verwendung der oben genannten Formeln ergeben sich die Flächenfaktoren $f_i (i = 1, 2, ... 6)$ in Figur 3c wie folgt:

$$\begin{pmatrix} f_1 \\ f_2 \\ f_{31} \end{pmatrix} = \begin{pmatrix} 1 & 0 & 0 \\ -1 & 1 & 0 \\ 0 & -1 & 1 \end{pmatrix} \begin{pmatrix} A_{3rel}(\varphi, \beta_G, \beta_{2G}, \beta_1) \\ A_{3rel}(\varphi, \beta_G, \beta_{2G}, \beta_2) \\ A_{3rel}(\varphi, \beta_G, \beta_{2G}, \beta_{2G}) \end{pmatrix}, \tag{35}$$

$$\begin{pmatrix} f_{32} \\ f_4 \\ f_{51} \end{pmatrix} = \begin{pmatrix} 1 & 0 & 0 \\ -1 & 1 & 0 \\ 0 & -1 & 1 \end{pmatrix} \begin{pmatrix} A_{4rel}(\varphi, \beta_g, \beta_{2g}, \beta_{2G}, \beta_3) \\ A_{4rel}(\varphi, \beta_g, \beta_{2g}, \beta_{2G}, \beta_4) \\ A_{4rel}(\varphi, \beta_g, \beta_{2g}, \beta_{2G}, \beta_{3G}) \end{pmatrix} \text{ und} \qquad (36)$$

$$\begin{pmatrix} f_{52} \\ f_6 \end{pmatrix} = \begin{pmatrix} 1 & -1 \\ 0 & 1 \end{pmatrix} \begin{pmatrix} A_{3rel}(\varphi, \beta_{4G}, \beta_{3G}, \beta_{3G}) \\ A_{3rel}(\varphi, \beta_{4G}, \beta_{3G}, \beta_5) \end{pmatrix} \qquad (37)$$

mit $f_3 = f_{31} + f_{32}$ und $f_5 = f_{51} + f_{52}$. Dieses Beispiel zeigt deutlich den allgemeinen Algorithmus zur Erzeugung der zweidimensionalen Gewichtungsfaktoren. Hierbei kann die Matrix der dritten Gruppe aus der transponierten Matrix der ersten beiden Gleichungen abgeleitet werden. Bei drei Dimensionen bleibt dieser Strukturalgorithmus in der xy-Ebene bestehen.

Dreidimensionaler Fall

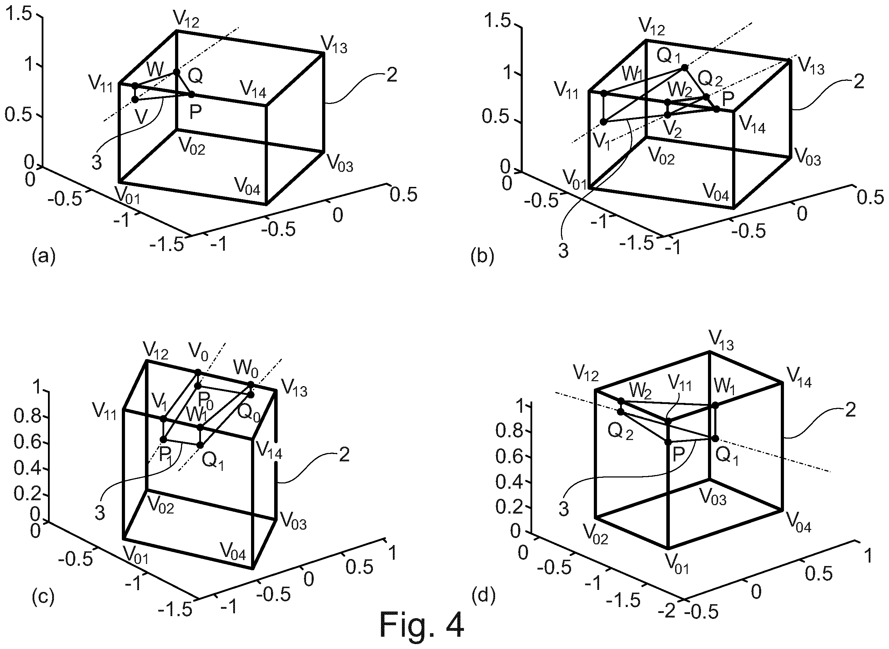

Figur 4 zeigt verschiedene Fälle des Beitrags eines Subvoxels 3 zu einem Detektorelement. Strahlen zu den Rändern des Detektorelements sind gestrichpunktet dargestellt. (a) Subvoxel VPQW mit dem Koeffizientenvektor $\mathbf{C_m}$ = (1, 0, 0, 0). (b) Subvoxel $V_1 V_2 W_2 Q_2 Q_1 W_1$ mit dem Koeffizientenvektor $\mathbf{C_m}$ = (1, 1, 0, 0). Das Volumen ist die Differenz zwischen den Volumina $V_1 PQ_1 W_1$ und $V_2 PW_2 Q_2$. (c) Subvoxel $P_1 Q_1 Q_0 P_0 V_1 W_1 V_0 W_0$ mit dem Koeffizientenvektor $\mathbf{C_m}$ = (1, 1, 1, 1). (d) Subvoxel $PQ_1 Q_2 V_1 W_1 W_2$ mit dem Koeffizientenvektor $\mathbf{C_m}$ = (1, 1, 1).

Für die folgende Analyse kann ein beliebig gewähltes orthorhombisches Voxel V mit den Seitenlängen $a$, $b$ und $c$ die Kanten $V_{11} = ((n_x + 1)a, n_y b, (n_z + 1)c)^\mathsf{T}$, $V_{12} = (n_x a, n_y b, (n_z + 1)c)^\mathsf{T}$, $V_{13} = (n_x a, {}_z(n_y + 1)b, (n_z + 1)c)^\mathsf{T}$, $V_{14} = ((n_x + 1)a, (n_y + 1)b, (n_z + 1)c)^\mathsf{T}$, $V_{01} = ((n_x + 1)a, n_y b, n_z c)^\mathsf{T}$, $V_{02} = (n_x a, n_y b, n_z c)^\mathsf{T}$, $V_{03} = (n_x a, (n_y + 1)b, n_z c)^\mathsf{T}$ und $V_{04} = ((n_x + 1)a, (n_y + 1)b, n_z c)^\mathsf{T}$ betrachtet werden, wobei $n_x$, $n_y$ und $n_z$ ganze Zahlen sind. Dann ist es notwendig, zusätzlich zur y-Komponente die z-Position der beteiligten Detektorelemente zu bestimmen. Aus Gleichung (7) lässt sich ableiten

$$\left[\frac{S+D}{d_z}\frac{\cos(\varphi-\beta)}{\cos\beta}\frac{z_{min}}{S\cos\varphi-x}\right]_{integer} \leq m_z < \left[\frac{S+D}{d_z}\frac{\cos(\varphi-\beta)}{\cos\beta}\frac{z_{max}}{S\cos\varphi-x}\right]_{integer} + 1 \text{ und} \tag{38}$$

$$\left[\frac{S+D}{d_z}\frac{\sin(\varphi-\beta)}{\cos\beta}\frac{z_{min}}{S\sin\varphi-y}\right]_{integer} \leq m_z < \left[\frac{S+D}{d_z}\frac{\sin(\varphi-\beta)}{\cos\beta}\frac{z_{max}}{S\sin\varphi-y}\right]_{integer} + 1 \, . \tag{39}$$

wobei $z_{max}$ und $z_{min}$ als obere bzw. untere Grenze des Voxel-Elements gewählt werden. Im Fall von $V_{11}$ und $V_{01}$, bei denen $\beta = \beta_g$ ist, gelten unter Berücksichtigung von Gleichung (21) z. B. die folgenden Beziehungen:

$$\left[\frac{S+D}{d_z}\frac{\sin(\beta_{2g}-\beta_g)}{\sin(\varphi-\beta_{2g})\cos\beta_g}\frac{n_z c}{a}\right]_{integer} \leq m_z \leq \left[\frac{S+D}{d_z}\frac{\sin(\beta_{2g}-\beta_g)}{\sin(\varphi-\beta_{2g})\cos\beta_g}\frac{(n_z+1)c}{a}\right]_{integer} \tag{40}$$

Zunächst wird der Fall betrachtet, dass nur der Schnittpunkt $V = ((n_x + 1)a, y, z)^\mathsf{T}$ des i-ten Strahls einen Beitrag durch die z-Komponente hat. Das sich daraus ergebende Volumen $Vol_{pyr}$ kann berechnet werden, indem die Punkte bestimmt werden, an denen die Strahlwege zur oberen Begrenzung des Detektors auf dessen Oberfläche treffen (siehe Figur 4a). Die Vektoren zu diesen Punkten P und Q können geschrieben werden als

$$\mathbf{p} = \begin{pmatrix} (n_x + 1)a \\ S\sin\varphi + \frac{1}{\sin\varphi}\left[(S\cos\varphi - (n_x + 1)a)\cos\varphi - \frac{S+D}{m_z d_z}(n_z + 1)c\right] \\ (n_z + 1)c \end{pmatrix} \text{ und} \tag{41}$$

$$\mathbf{q} = \begin{pmatrix} S\cos\varphi - \frac{S+D}{m_z d_z}\frac{\cos(\varphi-\beta_i)}{\cos\beta_i}(n_z+1)c \\ S\sin\varphi - \frac{S+D}{m_z d_z}\frac{\sin(\varphi-\beta_i)}{\cos\beta_i}(n_z+1)c \\ (n_z+1)c \end{pmatrix}. \tag{42}$$

Der Vektor v zum Punkt V kann wie folgt ausgedrückt werden

$$\mathbf{v} = \begin{pmatrix} (n_x+1)a \\ S\sin\varphi - (S\cos\varphi - (n_x+1)a)\tan(\varphi-\beta_i) \\ \frac{m_z d_z}{S+D}\frac{\cos\beta_i}{\cos(\varphi-\beta_i)}(S\cos\varphi - (n_x+1)a) \end{pmatrix}. \tag{43}$$

Das Volumen $Vol_{pyr}$ des resultierenden pyramidenförmigen Elements kann wie folgt berechnet werden

$$Vol_{pyr} = \frac{1}{6}\left|\left((n_x+1)a - q_x\right)\left(v_y - p_y\right)\left((n_z+1)c - v_z\right)\right|. \tag{44}$$

Unter Verwendung der Gleichungen (41) - (43) kann Gleichung (44) wie folgt geschrieben werden:

$$Vol_{pyr} = \frac{1}{6}a^3\left|\frac{\tan\alpha_{m_z}}{\sin\varphi}\left(\frac{\cos\beta_i}{\cos(\varphi-\beta_i)}\right)^2 g_i^3\right|, \text{ wobei} \tag{45}$$

$$g_i = \frac{c}{a}\frac{n_z+1}{\tan\alpha_{m_z}}\frac{\cos(\varphi-\beta_i)}{\cos\beta_i} - \frac{S\cos\varphi-(n_x+1)a}{a} = \frac{c}{a}\frac{n_z+1}{\tan\alpha_{m_z}}\frac{\cos(\varphi-\beta_i)}{\cos\beta_i} - \frac{\cos(\varphi-\beta_g)\sin(\varphi-\beta_{2g})}{\sin(\beta_{2g}-\beta_g)} \tag{46}$$

und $\tan\alpha_{m_z} = \frac{m_z d_z}{S+D}$. Wenn nur der Schnittpunkt $V = (n_x a, y, z)^T$ des i-ten Strahls einen Beitrag durch die z-Komponente hat, kann das resultierende Volumen $Vol_{pyr}$ wie folgt berechnet werden

$$Vol_{pyr} = \frac{1}{6}a^3\left|\frac{\tan\alpha_{m_z}}{\sin\varphi}\left(\frac{\cos\beta_i}{\cos(\varphi-\beta_i)}\right)^2 f_i^3\right|, \text{ wobei} \tag{47}$$

$$f_i = \frac{c}{a}\frac{n_z+1}{\tan\alpha_{m_z}}\frac{\cos(\varphi-\beta_i)}{\cos\beta_i} - \frac{S\cos\varphi-n_x a}{a} = \frac{c}{a}\frac{n_z+1}{\tan\alpha_{m_z}}\frac{\cos(\varphi-\beta_i)}{\cos\beta_i} - \frac{\cos(\varphi-\beta_{2g})\sin(\varphi-\beta_g)}{\sin(\beta_{2g}-\beta_g)}. \tag{48}$$

Für die Faktoren $f_i$ und $g_i$ gilt die folgende Beziehung:

$$g_i - f_i = 1. \tag{49}$$

Wenn die Schnittpunkte $V_1 = ((n_x+1)a, y_1, z)_1^T$ des i-ten Strahlwegs und $V_2 = ((n_x+1)a, y_2, z)_2^T$ des (i+1)-ten Strahlwegs Beiträge aufgrund der z-Komponente haben (siehe Figur 4b), kann das resultierende Volumen als eine Zusammensetzung der einzelnen Pyramidenvolumina beider Trajektorien betrachtet werden. Es lässt sich durch Subtraktion des kleineren vom größeren Volumen ermitteln. Daher kann das Volumen $Vol$ wie folgt berechnet werden:

$$Vol = \frac{1}{6}a^3\left|\frac{\tan\alpha_{m_z}}{\sin\varphi}\left[\left(\frac{\cos\beta_i}{\cos(\varphi-\beta_i)}\right)^2 g_i^3 - \left(\frac{\cos\beta_{i+1}}{\cos(\varphi-\beta_{i+1})}\right)^2 g_{i+1}^3\right]\right|. \tag{50}$$

Wenn alle vier Schnittpunkte einen Beitrag leisten (siehe Figur 4c), erhält man das resultierende Volumen $Vol$ mit Hilfe der folgenden Formel:

$$Vol = \frac{a}{6}\left[2\frac{|V_1P_1|+|W_1Q_1|}{2}|V_1W_1| + \frac{|V_1P_1|+|W_1Q_1|}{2}|V_0W_0| + \frac{|V_0P_0|+|W_0Q_0|}{2}|V_1W_1| + 2\frac{|V_0P_0|+|W_0Q_0|}{2}|V_0W_0|\right].$$ (51)

In weiterer Folge

$$Vol = \frac{1}{6}a^3\left|\frac{\tan\alpha_{m_z}}{\sin\varphi}\left[\left(\frac{\cos\beta_i}{\cos(\varphi-\beta_i)}\right)^2(f_i^2+f_ig_i+g_i^2) - \left(\frac{\cos\beta_{i+1}}{\cos(\varphi-\beta_{i+1})}\right)^2(f_{i+1}^2+f_{i+1}g_{i+1}+g_{i+1}^2)\right]\right|.$$ (52)

Unter Verwendung der Beziehung in Gl. (49) lautet das Endergebnis:

$$Vol = \frac{1}{6}a^3\left|\frac{\tan\alpha_{m_z}}{\sin\varphi}\left[(g_i^3-f_i^3)\left(\frac{\cos\beta_i}{\cos(\varphi-\beta_i)}\right)^2 - (g_{i+1}^3-f_{i+1}^3)\left(\frac{\cos\beta_{i+1}}{\cos(\varphi-\beta_{i+1})}\right)^2\right]\right|.$$ (53)

Zusammenfassend lässt sich das relative Volumen (im Verhältnis zum orthorhombischen Voxelvolumen $Vol_{voxel}$ = $abc$) $Vol_{rel}$ wie folgt ausdrücken:

$$Vol(m_z,\beta_i,\beta_{i+1},\mathbf{C}_{m_z})_{rel} = \frac{1}{6}\frac{a^2}{bc}\left|\frac{\tan\alpha_{m_z}}{\sin\varphi}\left[(C_1g_i^3-C_2f_i^3)\left(\frac{\cos\beta_i}{\cos(\varphi-\beta_i)}\right)^2 - (C_4g_{i+1}^3-C_3f_{i+1}^3)\left(\frac{\cos\beta_{i+1}}{\cos(\varphi-\beta_{i+1})}\right)^2\right]\right|,$$ (54)

wobei die Komponenten des Vektors $\mathbf{C}_{mz}$ = $(C_1, C_2, C_3, C)_4{}^T$ entweder 1 oder 0 sind, wenn eine Überschneidung stattfindet oder nicht. Der Einfachheit halber werden in der Funktion $Vol$ nur die Variablen aufgeführt, die sich innerhalb des Voxels ändern. In den Figuren 4a und 4b, $\mathbf{C}_{mz}$ ist $(1, 0, 0, 0)^T$ bzw. $(1, 0, 0, 1)^T$. Die resultierenden Volumenelemente können direkt oder durch die negative Kombination zweier Volumenelemente berechnet werden:

$$Vol(m_z,\beta_i,\beta_{i+1})_{res} = Vol(m_z-1,\beta_i,\beta_{i+1},\mathbf{C}_{m_z-1})_{rel} - Vol(m_z,\beta_i,\beta_{i+1}\mathbf{C}_{m_z})_{rel}$$ (55)

Bei der Singularität $\varphi = 0$ kann Gleichung (54) unter der Annahme, dass $g_i = g_{i+1}$ und $f_i = f_{i+1}$ ist, wie folgt ausgedrückt werden:

$$Vol(m_z,\beta_i,\beta_{i+1},\mathbf{C}_{m_z})_{rel} = \frac{1}{6}\frac{a^2}{bc}\left|\tan\alpha_{m_z}\left[g_i^2\left(g_i+3\frac{s}{a}-3n_x-3\right)(C_1\tan\beta_i-C_4\tan\beta_{i+1}) - f_i^2\left(f_i+3\frac{s}{a}-3n_x\right)(C_2\tan\beta_i-C_3\tan\beta_{i+1})\right]\right|.$$ (56)

In einem nächsten Schritt wird das zweite grundlegende Volumenelement, das im zweidimensionalen Fall dem Dreieck entspricht, weiter analysiert. Wenn alle Ecken zum Volumen $Vol$ beitragen (siehe Figur 4d), erhält man:

$$Vol = \frac{1}{6}|V_{11}W_1||VW_2|[|Q_1W_1| + |PV| + |Q_2W_2|],$$ (57)

wobei

$$|V_{11}W_1| = \frac{a}{\sin\varphi}\left[g_i\frac{\cos\beta_i}{\cos(\varphi-\beta_i)} - g_g\cos\varphi\right] = a\frac{\sin(\varphi-\beta_{2g})\sin(\beta_i-\beta_g)}{\sin(\beta_{2g}-\beta_g)\cos(\varphi-\beta_i)} \ , \qquad (58)$$

$$|V_{11}W_2| = a\left[g_g - g_{iy}\frac{1}{\cos\varphi}\frac{\cos\beta_i}{\sin(\varphi-\beta_i)}\right] = a\frac{\sin(\varphi-\beta_{2g})\sin(\beta_i-\beta_g)}{\sin(\beta_{2g}-\beta_g)\sin(\varphi-\beta_i)} , \qquad (59)$$

$$|Q_1W_1| = ag_i\tan\alpha_{m_z}\frac{\cos\beta_i}{\cos(\varphi-\beta_i)} \ , \qquad (60)$$

$$|PV_{11}| = ag_g\tan\alpha_{m_z}\cos\varphi \ \ \text{und} \qquad (61)$$

$$|Q_2W_2| = ag_{iy}\tan\alpha_{m_z}\frac{\cos\beta_i}{\sin(\varphi-\beta_i)} \ \text{mit} \qquad (62)$$

$$g_g = \frac{1}{\cos\varphi}\left[\frac{c}{a}\frac{n_z+1}{\tan\alpha_{m_z}} - \frac{S-(n_x+1)a\cos\varphi-n_yb\sin\varphi}{a}\right] = \frac{1}{\cos\varphi}\left[\frac{c}{a}\frac{n_z+1}{\tan\alpha_{m_z}} - \frac{\cos\beta_g\sin(\varphi-\beta_{2g})}{\sin(\beta_{2g}-\beta_g)}\right],$$

$$(63)$$

$$g_{iy} = \frac{c}{a}\frac{n_z+1}{\tan\alpha_{m_z}}\frac{\sin(\varphi-\beta_i)}{\cos\beta_i} - \frac{S\sin\varphi-n_ya}{a} = \frac{c}{a}\frac{n_z+1}{\tan\alpha_{m_z}}\frac{\sin(\varphi-\beta_i)}{\cos\beta_i} - \frac{\sin(\varphi-\beta_g)\sin(\varphi-\beta_{2g})}{\sin(\beta_{2g}-\beta_g)} \ . \ (64)$$

Die Parameter $g_g$, $g_i$ und $g_{iy}$ gehorchen der folgenden Beziehung:

$$g_i + \tan\varphi\, g_{iy} = g_g \ . \qquad (65)$$

Die Gleichungen (58) und (61) entsprechen den Gleichungen (28) und (29), die die Seiten des zweidimensionalen Dreiecks darstellen. Nach einiger algebraischer Arbeit und unter Verwendung von Gleichung (65) erhält man:

$$Vol = a^3\left|\frac{\tan\alpha_{m_z}}{\sin\varphi}\left[g_i^3\left(\frac{\cos\beta_i}{\cos(\varphi-\beta_i)}\right)^2 + \tan\varphi\, g_{iy}^3\left(\frac{\cos\beta_i}{\sin(\varphi-\beta_i)}\right)^2 - g_g^3\cos^2\varphi\right]\right| \ . \qquad (66)$$

Im Allgemeinen kann das relative Volumen (im Verhältnis zum orthorhombischen Voxelvolumen $Vol_{voxel} = abc$) $Vol_{rel}$ wie folgt ausgedrückt werden:

$$Vol(m_z,\beta_i,\mathbf{C_{m_z}})_{rel} = \frac{1}{6}\frac{a^2}{bc}\left|\frac{\tan\alpha_{m_z}}{\sin\varphi}\left[C_1g_i^3\left(\frac{\cos\beta_i}{\cos(\varphi-\beta_i)}\right)^2 + C_2\tan\varphi\, g_{iy}^3\left(\frac{\cos\beta_i}{\sin(\varphi-\beta_i)}\right)^2 - \right.\right.$$

$$\left.\left. C_3g_g^3\cos^2\varphi\right]\right|, \qquad (67)$$

wobei $\mathbf{C_{mz}} = (C_1, C_2, C)_3^{\mathsf{T}}$ entweder 1 oder 0 sind, wenn eine Überschneidung stattfindet oder nicht. Die sich ergebenden Volumenelemente können direkt oder durch die negative Kombination von zwei Volumenelementen berechnet werden:

$$Vol(m_z,\beta_i,\mathbf{C_{m_z}})_{res} = Vol(m_z - 1,\beta_i,\mathbf{C_{m_z-1}})_{rel} - Vol(m_z,\beta_i,\mathbf{C_{m_z}})_{rel} \ . \qquad (68)$$

Bei der Singularität $\varphi = 0$ kann Gleichung (68) wie folgt ausgedrückt werden:

$$Vol(m_z, \beta_i, \mathbf{C_{m_z}})_{rel} = \frac{a^2}{bc} \left| \tan \alpha_{m_z} \left[ \frac{1}{6} C_1 g_i^2 \left( g_i - 3 \frac{\cos \beta_g \sin \beta_{gg}}{\sin(\beta_{gg} - \beta_g)} \right) \tan \beta_i + \right. \right.$$

$$\left. \left. \frac{1}{2} C_2 g_g^2 \frac{\sin \beta_g \sin \beta_{gg}}{\sin(\beta_{gg} - \beta_g)} + \frac{1}{6} C_3 g_{iy}^3 \cot^2 \beta_i \right] \right|. \tag{69}$$

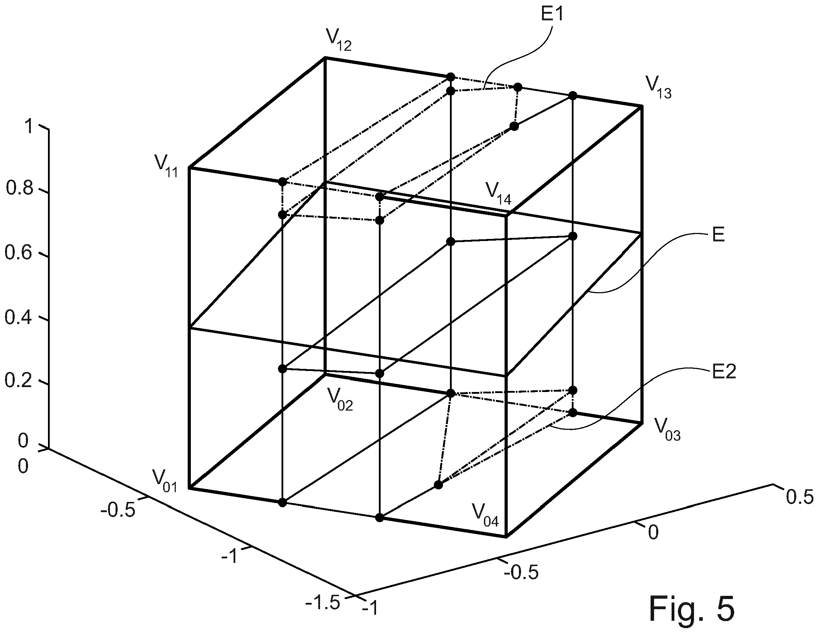

In Figur 5 wird der ausgearbeitete Algorithmus veranschaulicht. Zur Berechnung der relativen Volumina der einzelnen Voxel-Elemente wird die Zelle in einem ersten Schritt durch eine Ebene E, die die vordere und hintere Ebene schneidet, in zwei Hälften geteilt. Dann werden die Volumina von oben und unten berechnet. Für die oberen und unteren Elemente E1 und E2 sind die Vektoren $\mathbf{C_m}$ $(1, 1, 0, 1)^T$ bzw. $(0, 0, 1, 0)^T$. Um die Volumenelemente der nächsten Zellen zu erhalten, werden sie von den nachfolgenden Zellen mit den Vektoren $\mathbf{C_m} = (1, 1, 1, 1)^T$ subtrahiert, die die obere und untere Fläche erreichen. Schließlich müssen die Volumina der geteilten mittleren Zelle addiert werden.

Ringförmiger statischer Detektor

Im Falle eines geschlossenen, gekrümmten, d. h. ringförmigen Detektors wie bei der CT des menschlichen Körpers kann ein Vektor $\mathbf{d}$ einem Punkt am Rand eines Detektorelements wie folgt zugeordnet werden

$$\mathbf{d} = \begin{pmatrix} -D \cos(m_y \Omega) \\ -D \sin(m_y \Omega) \\ m_z d_z \end{pmatrix}, \tag{70}$$

wobei $m_y$ und $m_z$ ganze Zahlen sind, $d_z$ die Länge des Detektorelements in z-Richtung ist und $\Omega$ der Öffnungswinkel eines Detektorelements ist. Wird nur die Röntgenquelle um den Winkel $\varphi$ gegen den Uhrzeigersinn um die *z-Achse* gedreht, kann $\mathbf{d_s}$ wie folgt geschrieben werden

$$\mathbf{d_s} = \begin{pmatrix} S \cos \varphi \\ S \sin \varphi \\ 0 \end{pmatrix} + \lambda \begin{pmatrix} S \cos \varphi + D \cos(m_y \Omega) \\ S \sin \varphi + D \sin(m_y \Omega) \\ -m_z d_z \end{pmatrix} \tag{71}$$

wobei $\lambda$ eine reelle Zahl ist. Gleichung (71) kann auch geschrieben werden als

$$\mathbf{d_s} = \begin{pmatrix} S \cos \varphi \\ S \sin \varphi \\ 0 \end{pmatrix} + \lambda \begin{pmatrix} L \cos \beta_m \\ L \sin \beta_m \\ -m_z d_z \end{pmatrix} \tag{72}$$

wobei

$$\tan \beta_m = \left( S \sin \varphi + D \sin(m_y \Omega) \right) / \left( S \cos \varphi + D \cos(m_y \Omega) \right) \text{ und} \tag{73}$$

$$L_m = \sqrt{S^2 + D^2 + 2SD \cos(\varphi + m_y \Omega)} = \left( S \cos \varphi + D \cos(m_y \Omega) \right) / \cos \beta_m. \tag{74}$$

Daher gelten für einen beliebigen Punkt (x,y,z) entlang eines Strahls mit dem Winkel β die folgenden Beziehungen:

$$z = \frac{m_z d_z}{L \cos \beta} (S \cos \varphi - x) = \frac{m_z d_z}{L \sin \beta} (S \sin \varphi - y), \tag{75}$$

$$x = S \cos \varphi - \frac{L \cos \beta}{m_z d_z} z, \tag{76}$$

$$y = S \sin \varphi - \frac{L \sin \beta}{m_z d_z} z \tag{77}$$

$$\tan \beta = \frac{S \sin \varphi - y}{S \cos \varphi - x} \ . \tag{78}$$

$$x = S \cos \varphi - (S \sin \varphi - y) \cot \beta \tag{79}$$

$$y = S \sin \varphi - (S \cos \varphi - x) \tan \beta \tag{80}$$

Hierbei gelten die Gleichungen (78) bis (80) für jeden beliebigen Strahlweg.

Sei zunächst $z = 0$. Für die folgende Analyse ist es günstig, die Winkel $\beta_g$, $\beta_{2g}$, $\beta_{3g}$ und $\beta_{4g}$ den vier Kanten $V_1 = ((n_x+1)a, n_y b)^\mathsf{T}$, $V_2 = (n_x a, n_y b)^\mathsf{T}$, $V_3 = (n_x a, (n_y+1)b)^\mathsf{T}$ und $V_4 = ((n_x+1)a, (n_y+1)b)^\mathsf{T}$, wobei $a$ und $b$ die Seiten des Pixels sind. Aus Gleichung (78) lassen sich die folgenden Beziehungen ableiten:

$$\tan \beta_g = \frac{S \sin \varphi - n_y b}{S \cos \varphi - (n_x+1)a} , \tag{81}$$

$$\tan \beta_{2g} = \frac{S \sin \varphi - n_y b}{S \cos \varphi - n_x a} , \tag{82}$$

$$\tan \beta_{3g} = \frac{S \sin \varphi - (n_y+1)b}{S \cos \varphi - n_x a} \quad \text{und} \tag{83}$$

$$\tan \beta_{4g} = \frac{S \sin \varphi - (n_y+1)b}{S \cos \varphi - (n_x+1)a} \ . \tag{84}$$

Aus den Gleichungen (81) und (82) lässt sich der folgende Ausdruck ableiten:

$$\cot \beta_{2g} - \cot \beta_g = \frac{a}{S \sin \varphi - n_y b} \ . \tag{85}$$

Daraus ergibt sich die folgende Beziehung:

$$S \sin \varphi - n_y b = a \frac{\sin \beta_g \sin \beta_{2g}}{\sin(\beta_{2g} - \beta_g)} \ . \tag{86}$$

Kombiniert man die Gleichungen (82) und (81) mit Gleichung (86), so erhält man:

$$S \cos \varphi - n_x a = a \frac{\sin \beta_g \cos \beta_{2g}}{\sin(\beta_{2g} - \beta_g)} , \tag{87}$$

$$S \cos \varphi - (n_x + 1)a = a \frac{\cos \beta_g \sin \beta_{2g}}{\sin(\beta_{2g} - \beta_g)} \ . \tag{88}$$

Der Winkel $\beta_i$ des Strahls von der Quelle S bis zum i-ten Schnittpunkt der Detektorelemente kann wie folgt geschrieben werden:

$$\tan \beta_i = \left(S \sin \varphi + D \sin\left(m_{yi}\Omega\right)\right)/\left(S \cos \varphi + D \cos\left(m_{yi}\Omega\right)\right) . \tag{89}$$

Aus Gleichung (89) lassen sich die folgenden Beziehungen ableiten:

$$\cos\left(m_{yi}\Omega\right) = \frac{S}{D} \sin \beta_i \sin(\varphi - \beta_i) + \cos \beta_i \sqrt{1 - \left(\frac{S}{D}\right)^2 \sin^2(\varphi - \beta_i)} \quad \text{und} \tag{90}$$

$$\sin\left(m_{yi}\Omega\right) = -\frac{S}{D} \cos \beta_i \sin(\varphi - \beta_i) + \sin \beta_i \sqrt{1 - \left(\frac{S}{D}\right)^2 \sin^2(\varphi - \beta_i)} . \tag{91}$$

Unter Verwendung von Gleichung (90) kann aus Gleichung (74) die folgende Beziehung abgeleitet werden:

$$L_i = S \cos(\varphi - \beta_i) + \sqrt{D^2 - S^2 \sin^2(\varphi - \beta_i)} . \tag{92}$$

Die ganzen Zahlen $m_{yi}$ lassen sich aus den folgenden Beziehungen ableiten:

$$Minimum\left[\frac{\cos^{-1}\left(\frac{S}{D}\sin \beta_i \sin(\varphi - \beta_i) + \cos \beta_i \sqrt{1 - \left(\frac{S}{D}\right)^2 \sin^2(\varphi - \beta_i)}\right)}{\Omega}\right]_{integer} \leq m_{yi} \quad \text{und} \tag{93}$$

$$m_{yi} < Maximum\left[\frac{\cos^{-1}\left(\frac{S}{D}\sin \beta_i \sin(\varphi - \beta_i) + \cos \beta_i \sqrt{1 - \left(\frac{S}{D}\right)^2 \sin^2(\varphi - \beta_i)}\right)}{\Omega}\right]_{integer} . \tag{94}$$

Zweidimensionaler Fall: XY-Ebene

Dreieck in XY-Ebene

In der folgenden Herleitung wird davon ausgegangen, dass das Dreieck durch die Ecke $V_1$ des Pixels und die Schnittpunkte des i-ten Strahls mit den umschließenden Seiten dieser Ecke begrenzt wird, die als $P_x$ und $P_y$ zugeordnet werden können (siehe Figur 3a). Unter Verwendung der Gleichungen (79) und (80) können die entsprechenden Vektoren wie folgt geschrieben werden:

$$\mathbf{v_1} = \begin{pmatrix} (n_x + 1)a \\ n_y b \end{pmatrix} , \tag{95}$$

$$\mathbf{p_x} = \begin{pmatrix} (n_x + 1)a \\ S \sin \varphi - (S \cos \varphi - (n_x + 1)a) \tan \beta_i \end{pmatrix} \quad \text{und} \tag{96}$$

$$\mathbf{p_y} = \begin{pmatrix} S \cos \varphi - (S \sin \varphi - n_y a) \cot \beta_i \\ n_y b \end{pmatrix} \tag{97}$$

Mit Hilfe der Gleichungen (86) und (88) lassen sich die beiden Seiten des erhaltenen rechtwinkligen Dreiecks wie folgt berechnen:

$$|\mathbf{p_x} - \mathbf{v_1}| = a \left| \frac{\sin \beta_{2g} \sin(\beta_i - \beta_g)}{\sin(\beta_{2g} - \beta_g) \cos \beta_i} \right| \quad \text{und} \tag{98}$$

$$|\mathbf{v_1} - \mathbf{p_y}| = a \left| \frac{\sin \beta_{2g} \sin(\beta_i - \beta_g)}{\sin(\beta_{2g} - \beta_g) \sin \beta_i} \right|. \tag{99}$$

Die sich daraus ergebende Fläche $A_{tri}$ lässt sich daher wie folgt beschreiben:

$$A_{tri}(\varphi, \beta_g, \beta_{2g}, \beta_i) = \frac{a^2}{|\sin 2\beta_i|} \left( \frac{\sin \beta_{2g} \sin(\beta_i - \beta_g)}{\sin(\beta_{2g} - \beta_g)} \right)^2. \tag{100}$$

Da die Fläche des rechteckigen Pixels $ab$ ist, ist der relative Flächenfaktor:

$$A_{3rel}(\varphi, \beta_g, \beta_{2g}, \beta_i) = \frac{a}{b} \frac{1}{|\sin 2\beta_i|} \left( \frac{\sin \beta_{2g} \sin(\beta_i - \beta_g)}{\sin(\beta_{2g} - \beta_g)} \right)^2 \tag{101}$$

Trapez in der XY-Ebene

Wenn die i-ten und (i+1)-ten Strahlen zwei gegenüberliegende Seiten des Pixels schneiden, entsteht ein Trapez. Die Schnittpunkte können als Pi , Pi+i , $Q_i$ und Qi+i bezeichnet werden (siehe Figur 3b). Da die Höhe des Trapezes $a$ ist, kann die Fläche $A_{tra}$ wie folgt ausgedrückt werden

$$A_{tra} = a \frac{|\mathbf{p_{i+1}} - \mathbf{p_i}| + |\mathbf{q_{i+1}} - \mathbf{q_i}|}{2} = \left| a (S \cos \varphi - \left( n_x + \frac{1}{2} \right) a)(\tan \beta_i - \tan \beta_{i+1}) \right|. \tag{102}$$

Dann ist der relative Flächenfaktor:

$$A_{4rel}(\varphi, n_x, \beta_i, \beta_{i+1}) = \frac{1}{b} \left| a (S \cos \varphi - \left( n_x + \frac{1}{2} \right) a)(\tan \beta_i - \tan \beta_{i+1}) \right|. \tag{103}$$

Unter Verwendung der Gleichungen (87) und (88) kann Gleichung (102) wie folgt geschrieben werden:

$$A_{tra}(\varphi, \beta_g, \beta_{2g}, \beta_i, \beta_{i+1}) = a^2 \left| \frac{\sin(\beta_g + \beta_{2g})}{2\sin(\beta_{2g} - \beta_g)} (\tan \beta_i - \tan \beta_{i+1}) \right|. \tag{104}$$

Dreidimensionaler Fall

Unter Verwendung von Gleichung (92) kann Gleichung (75) wie folgt umgeschrieben werden:

$$z = \frac{m_z d_z}{S \cos \beta \cos(\varphi - \beta) + \cos \beta \sqrt{D^2 - S^2 \sin^2(\varphi - \beta)}} (S \cos \varphi - x) =$$

$$= \frac{m_z d_z}{S \sin \beta \cos(\varphi - \beta) + \sin \beta \sqrt{D^2 - S^2 \sin^2(\varphi - \beta)}} (S \cos \varphi - y), \tag{105}$$

$$\left[ \frac{S \cos \beta \cos(\varphi - \beta) + \cos \beta \sqrt{D^2 - S^2 \sin^2(\varphi - \beta)}}{d_z} \frac{z_{min}}{S \cos \varphi - x} \right]_{integer} \leq m_z \quad \text{und} \tag{106}$$

$$m_z < \left[ \frac{S \cos \beta \cos(\varphi - \beta) + \cos \beta \sqrt{D^2 - S^2 \sin^2(\varphi - \beta)}}{d_z} \frac{z_{max}}{S \cos \varphi - x} \right]_{integer} + 1. \tag{107}$$

wobei $z_{max}$ und $z_{min}$ als obere bzw. untere Grenze des Voxel-Elements gewählt werden. Im Fall von $V_{11}$ und $V_{01}$, bei denen $\beta = \beta_g$ ist, gelten z. B. die folgenden Beziehungen unter Berücksichtigung von Gleichung (87):

$$
\left[ \frac{S\cos(\varphi-\beta_g)+\sqrt{D^2-S^2\sin^2(\varphi-\beta_g)}}{d_z} \frac{\sin(\beta_{2g}-\beta_g)}{\sin\beta_{2g}} \frac{n_z c}{a} \right]_{integer} \leq m_z \leq
$$

$$
\leq \left[ \frac{S\cos(\varphi-\beta_g)+\sqrt{D^2-S^2\sin^2(\varphi-\beta_g)}}{d_z} \frac{\sin(\beta_{2g}-\beta_g)}{\sin\beta_{2g}} \frac{(n_z+1)c}{a} \right]_{integer}
$$

$$(108)$$

Unter Verwendung von Gleichung (105) können die Gleichungen (76) und (77) wie folgt umgeschrieben werden:

$$
x = S\cos\varphi - \frac{S\cos\beta\cos(\varphi-\beta)+\cos\beta\sqrt{D^2-S^2\sin^2(\varphi-\beta)}}{m_z d_z} z = S\cos\varphi - \frac{L\cos\beta}{m_z d_z} z \quad \text{und}
$$

$$(109)$$

$$
y = S\sin\varphi - \frac{S\sin\beta\cos(\varphi-\beta)+\sin\beta\sqrt{D^2-S^2\sin^2(\varphi-\beta)}}{m_z d_z} z = S\sin\varphi - \frac{L\sin\beta}{m_z d_z} z \quad .
$$

$$(110)$$

Weitere algebraische Arbeiten führen zu den folgenden Beziehungen (Gleichungen (111) und (117)), die analog zu den Gleichungen (54) und (67) für den Flachdetektor sind:

$$
Vol(m_z, \beta_i, \beta_{i+1}, \mathbf{C_{m_z}})_{rel} = \frac{1}{6}\frac{a^2}{bc} \left| \tan\alpha_{m_z} B_y(\beta_i, \beta_{i+1}) \left[ (C_1 g_i^3 - C_2 f_i^3)\left(\frac{1}{f_y(\beta_i)}\right)^2 - \right. \right.
$$

$$
\left. \left. (C_4 g_{i+1}^3 - C_3 f_{i+1}^3)\left(\frac{1}{f_y(\beta_{i+1})}\right)^2 \right] \right| , \tag{111}
$$

wobei

$$
\tan\alpha_{m_z} = \frac{m_z d_z}{S+D} , \tag{112}
$$

$$
f_y(\beta_i) = \frac{L_i \cos\beta_i}{S+D} = \frac{\left(S\cos(\varphi-\beta_i)+\sqrt{D^2-S^2\sin^2(\varphi-\beta_i)}\right)\cos\beta_i}{S+D} , \tag{113}
$$

$$
B_y(\beta_i, \beta_{i+1}) = \frac{f_y(\beta_i)f_y(\beta_{i+1})}{f_y(\beta_i)-f_y(\beta_{i+1})} \left[ \tan\beta_{i+1} - \tan\beta_i \right] , \tag{114}
$$

$$
g_i = \frac{c}{a}(n_z+1)f_y(\beta_i)\frac{1}{\tan\alpha_{m_z}} - \frac{S\cos\varphi-(n_x+1)a}{a} = \frac{c}{a}(n_z+1)f_y(\beta_i)\frac{1}{\tan\alpha_{m_z}} - \frac{\cos\beta_g\sin\beta_{2g}}{\sin(\beta_{2g}-\beta_g)} \quad \text{und}
$$

$$(115)$$

$$f_i = \frac{c}{a}(n_z + 1)\mathfrak{f}_y(\beta_i)\frac{1}{\tan\alpha_{m_z}} - \frac{S\cos\varphi - n_x a}{a} = \frac{c}{a}(n_z + 1)\mathfrak{f}_y(\beta_i)\frac{1}{\tan\alpha_{m_z}} - \frac{\cos\beta_g\sin\beta_{2g}}{\sin(\beta_{2g}-\beta_g)}.$$

$$(116)$$

$$Vol(m_z,\beta_i,\mathbf{C_{m_z}})_{rel} = \frac{1}{6}\frac{a^2}{bc}\left|\tan\alpha_{m_z}\left[C_1 g_i^3 B_y(\beta_i,\beta_g)\left(\frac{1}{\mathfrak{f}_y(\beta_i)}\right)^2 + \right.\right.$$

$$\left.\left. C_2 g_{iy}^3 B_x(\beta_i,\beta_g)\left(\frac{1}{\mathfrak{f}_x(\beta_i)}\right)^2 - C_3 g_g^3 B_x(\beta_i,\beta_g)B_y(\beta_i,\beta_g)\right]\right|,$$

$$(117)$$

wobei

$$\mathfrak{f}_x(\beta_i) := \frac{L_i\sin\beta_i}{S+D}$$

$$(118)$$

$$B_x(\beta_i,\beta_g) = \frac{\mathfrak{f}_x(\beta_i)\mathfrak{f}_x(\beta_g)}{\mathfrak{f}_x(\beta_i)-\mathfrak{f}_x(\beta_g)}\left[\cot\beta_g - \cot\beta_i\right],$$

$$(119)$$

$$g_{yi} = \frac{c}{a}(n_z + 1)\mathfrak{f}_x(\beta_i)\frac{1}{\tan\alpha_{m_z}} - \frac{\sin\beta_g\sin\beta_{2g}}{\sin(\beta_{2g}-\beta_g)},$$

$$(120)$$

$$g_g = \frac{c}{a}(n_z + 1)\frac{1}{\tan\alpha_{m_z}} - \frac{\sin\beta_{2g}}{\sin(\beta_{2g}-\beta_g)}\frac{1}{\mathfrak{f}_0(\beta_g)} \text{ und}$$

$$(121)$$

$$\mathfrak{f}_0(\beta_g) = \frac{L_g}{S+D} = \left[S\cos(\varphi-\beta_g) + \sqrt{D^2 - S^2\sin^2(\varphi-\beta_g)}\right]/(S+D).$$

$$(122)$$

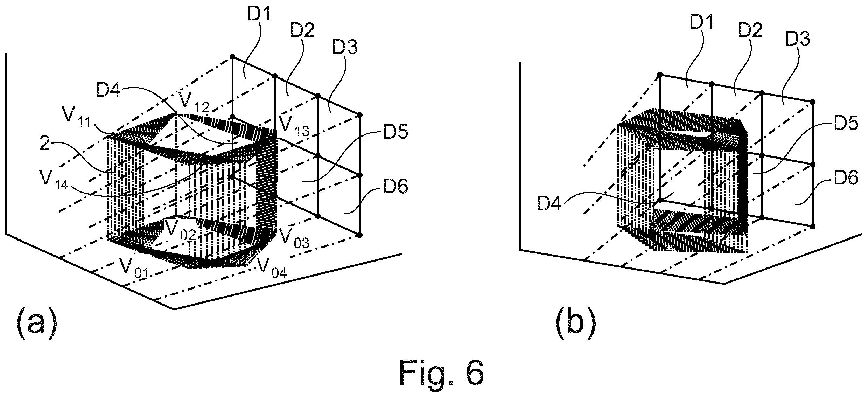

Figur 6 zeigt die Integration der Gewichtungskoeffizienten für die jeweiligen Detektorelemente D1 bis D6 für ein einzelnes Voxel 2 bei Rotation (a) und Rotations- und Translationsbewegung (b). Die Röntgenstrahlen zu den Ecken der Detektorelemente D1 bis D6 sind gestrichpunktet eingezeichnet.

Das bedeutet, dass es mit dem hier vorgestellten Algorithmus möglich ist, die während der Rotation und der Längstranslation des Strahlbündels 4 relativ zur Probe 1 erfassten Daten praktisch lückenlos und ohne Interpolation in die tomographische Rekonstruktion einzubeziehen.

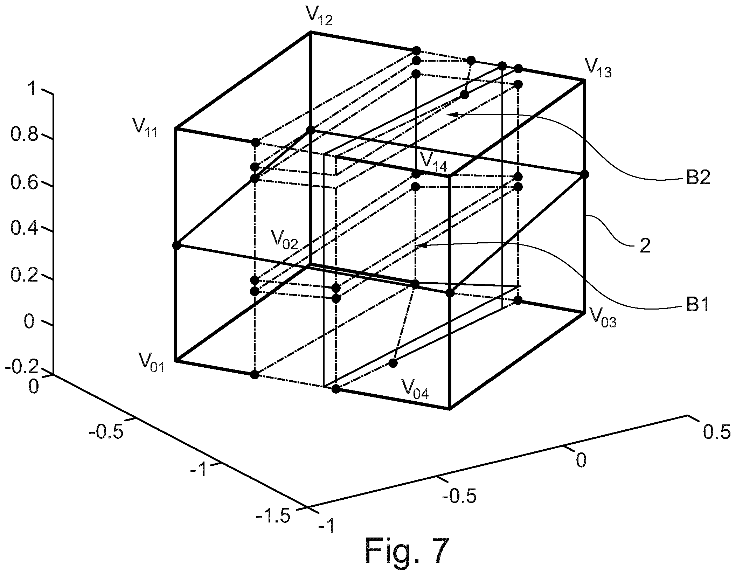

Figur 7 zeigt, wie blinde Flecken B1, B2 zwischen Detektorelementen D1, D2 und D3 bei der Auswertung berücksichtigt werden können: Die Berechnung der Subvoxel 3, die vom Strahlbündel 4 erfasst werden und zur Intensität auf den Detektorelementen D1, D2 bzw. D3 beitragen, kann dann ausgehend von lediglich den aktiven Teilen dieser Detektorelemente D1, D2 und D3 erfolgen. Wenn also Anteile des Strahlbündels, die durch bestimmte Bereiche B1 und B2 des Voxels 2 hindurchtreten, nicht im aktiven Bereich eines Detektorelements D1, D2 oder D3 landen und somit von keinem der Detektorelemente D1, D2 und D3 registriert werden, können diese Bereiche B1 und B2 von vornherein als "blinde Flecken" ausgespart bleiben.

Fazit

Es wurde ein effizienter und einfach zu implementierender Algorithmus für die Kegelstrahl-CT entwickelt, um die Voxel in ihre jeweiligen Sub-Voxel zu zerlegen, die zu den zugehörigen Detektorelementen beitragen. Es wurden explizite mathematische Ausdrücke abgeleitet, um die exakten Volumina zu berechnen. Zwei mathematische Funktionen, d. h. die Gleichungen (54) & (67) für Flachdetektoren und (111) & (117) für ringförmige Detektoren, reichen aus, um die Gewichtungskoeffizienten aller beitragenden Subvoxel zu bestimmen. Die Datenerfassung während der Rotation und der longitudinalen Translation wie bei Spiral-CT-Techniken kann ohne Interpolation einbezogen werden. Durch die richtige Wahl der Voxelparameter, d. h. der Winkel in der xy-Ebene und der z-Achse, kann der Algorithmus leicht erweitert werden, um systemimmanente Bedingungen zu berücksichtigen, wie z. B. blinde Flecken zwischen den Detektorelementen und

## EP 4 498 323 A1

Kollimatoren in CT-Geräten für den menschlichen Körper.

**Bezugszeichenliste**

| | |
|---|---|
| 1 | Probe |
| 2 | Voxel |
| 2a | Gewichtungsfaktor des Voxels 2 |
| 3, 3' | erfasster Anteil, Subvoxel, eines Voxels 2 |
| 3a | geometrische Form des Subvoxels 3 |
| 3b | Volumen des Subvoxels 3 |
| 4 | Strahlbündel |
| 4a | Schnittpunkte/Schnittlinien des Strahlbündels 4 mit Voxel 2 |
| 4b | mit Detektor registrierte Intensität des Strahlbündels 4 |
| 5 | Sammlung geschlossener Formeln 5a |
| 5a | geschlossene Formeln für Volumina 3b von Formen 3a |
| 6 | nicht vom Strahlbündel 4 erfasste Bereiche des Voxels 2 |
| 6a | Formen der Bereiche 6 |
| 6b | Volumina der Bereiche 6 |
| 7 | Gleichungen |
| 100 | Verfahren zum Ermitteln der Volumina 3b von Anteilen 3a |
| 110 | Bereitstellen der Sammlung 5 von Formeln 5a |
| 111 | Wahl einer Sammlung 5 mit Polyeder |
| 120 | Ermitteln von Schnittpunkten und/oder Schnittlinien 4a |
| 121 | spezifische Methoden zur Berechnung von Schnittpunkten/-linien 4a |
| 130 | Ermitteln geometrischer Formen 3a von Subvoxeln 3 |
| 131 | Unterteilen des ursprünglichen Voxels 2 in zwei Teile |
| 132 | Ermitteln erfasster Subvoxel 3' für die zwei Teile des Voxels 2 |
| 133 | Vereinigung der Subvoxel 3' zu Subvoxeln 3 des Voxels 2 |
| 140 | Prüfen, ob Sammlung 5 Formel 5a für Form 3a enthält |
| 150 | Berechnen des Volumens 3b mit Formel 5a |
| 160 | subtraktives Ermitteln des Volumens 3b über Anteile 6 |
| 161 | Zerlegen eines nicht erfassten Bereichs 6 in zwei Teile |
| 161a | Zerlegung eines Teils ohne Formel 5a in zwei Unterteile |
| 161b | Berechnung des Volumens eines Unterteils mit Formel 5a |
| 162 | Berechnung des Volumens 6b eines Teils mit Formel 5a |
| 170a | Ablegen berechneter Volumina in Speicher |
| 170b | Wiederverwenden berechneter Volumina |
| 180 | Ermitteln der Volumina 3 für alle Anteile 3 von Voxeln 2 |
| 190 | Aufstellen mindestens einer Gleichung 7 |
| 191 | Kombinieren vieler Gleichungen 7 zu Gleichungssystem |
| 191a | Aufstellen von Gleichungen 7 für rotierte/versetzte Bündel 4 |
| 192 | Lösen des Gleichungssystems nach Abschwächungskoeffizienten 2a |
| 193 | Lösen mit iterativem numerischem Lösungsverfahren |
| 193 | Wahl eines ebenen oder ringförmigen Detektors |
| B1, B2 | blinde Flecken |
| D1-D6 | Detektorelemente |
| E1, E2 | Volumenelemente |

**Patentansprüche**

1. Verfahren (100) zum Ermitteln des Volumens (3b) von Anteilen (3) eines Voxels (2) in einer Probe (1), der von einem die Probe (1) durchdringenden Strahlbündel (4) erfasst wird, als Subvoxel, wobei das Strahlbündel (4) von einem Ausgangspunkt ausgeht und eine kegelförmige Geometrie aufweist, mit den Schritten:

   • es wird eine Sammlung (5) geschlossener Formeln (5a) für die Berechnung von Volumina geometrischer Formen bereitgestellt (110);

• es werden Schnittpunkte und/oder Schnittlinien (4a) des Strahlbündels (4) mit den Grenzen des Voxels (2) ermittelt (120);
• anhand dieser Schnittpunkte und/oder Schnittlinien (4a) werden geometrische Formen (3a) der Subvoxel (3) ermittelt (130);
• für diese Formen (3a) wird geprüft (140), ob die Sammlung (5) eine geschlossene Formel (5a) für die Berechnung des Volumens (3b) der jeweiligen Form (3a) enthält;
• sofern die Sammlung (5) eine geschlossene Formel (5a) für die Berechnung des Volumens (3b) der jeweiligen Form (3a) enthält, wird mit dieser Formel (5a) das gesuchte Volumen (3b) ermittelt (150);
• sofern die Sammlung (5) eine solche geschlossene Formel (5a) nicht enthält, wird das gesuchte Volumen (3b) ermittelt (160), indem die Volumina (6b) von nicht vom Strahlbündel (4) erfassten Anteilen (6) des Voxels (2) ermittelt und vom Gesamtvolumen des Voxels (2) subtrahiert werden.

2. Verfahren (100) nach Anspruch 1, wobei
das ursprüngliche Voxel (2) in zwei Teile unterteilt wird (131),

für jeden dieser Teile jeweils erfasste Subvoxel (3') bestimmt werden (132) und
die so insgesamt bestimmten Subvoxel (3') zu den gesuchten Subvoxeln (3) des ursprünglichen Voxels (2) vereinigt werden (133).

3. Verfahren (100) nach einem der Ansprüche 1 bis 2, wobei

• mindestens ein nicht vom Strahlbündel (4) erfasster Anteil (6) des Voxels in mindestens zwei Teile zerlegt wird (161), wobei mindestens ein Teil so gewählt wird, dass die Sammlung (5) für die Berechnung seines Volumens (6b) eine geschlossene Formel (5a) bereitstellt; und
• das Volumen (6b) dieses mindestens einen Teils mit dieser geschlossenen Formel (5a) ermittelt wird (162).

3.Verfahren (100) nach Anspruch 2, wobei

• ein bei der Zerlegung ermittelter Teil, dessen Volumen (6b) mit keiner geschlossenen Formel (5a) aus der Sammlung (5) ermittelbar ist, wiederum in zwei Unterteile zerlegt wird (161a), wobei mindestens ein Unterteil so gewählt wird, dass die Sammlung (5) für die Berechnung seines Volumens eine geschlossene Formel (5a) bereitstellt; und
• das Volumen dieses mindestens einen Unterteils mit dieser geschlossenen Formel (5a) ermittelt wird (161b).

4. Verfahren (100) nach einem der Ansprüche 1 bis 3, wobei die Sammlung (5) mindestens eine geschlossene Formel (5a) für die Berechnung des Volumens eines Polyeders enthält (111).

5. Verfahren nach einem der Ansprüche 1 bis 4, wobei die Schnittpunkte und/oder Schnittlinien (4a) des Strahlbündels (4) mit den Grenzen des Voxels (2) anhand

• der relativen Anordnung des Ausgangspunkts zum Voxel (2),
• einer in einer oder mehreren Winkeln gegebenen Ausbreitungsrichtung des Strahlbündels (4) ausgehend vom Ausgangspunkt sowie
• eines Öffnungswinkels der kegelförmigen Geometrie des Strahlbündels (4) ermittelt werden (121).

6. Verfahren (100) nach einem der Ansprüche 1 bis 5, wobei mindestens ein mit einer geschlossenen Formel (5a) berechnetes Volumen einer geometrischen Form in einem Speicher abgelegt (170a) und, wenn die Berechnung des Volumens einer gleichen geometrischen Form ansteht, wiederverwendet wird (170b).

7. Verfahren (100) nach einem der Ansprüche 1 bis 6, wobei

• Volumina (3b) der Anteile (3) aller Voxel (2), die von einem die Probe (1) durchdringenden Strahlbündel erfasst (4) werden, ermittelt werden (180) und
• mindestens eine Gleichung (7) aufgestellt wird (190), die eine mit diesen Volumina (3b) gewichtete Summe von Abschwächungskoeffizienten (2a) von Voxeln (2) in Beziehung setzt zu einer nach dem Durchdringen der Probe (1) mit einem Detektor gemessenen Intensität (4b) des Strahlbündels (4).

8. Verfahren (100) nach Anspruch 7, wobei

• eine Vielzahl von Gleichungen (7) für Strahlbündel (4), die die Probe (1) auf unterschiedlichen Wegen durchdringen, zu einem Gleichungssystem kombiniert wird (191) und
• das Gleichungssystem nach den Abschwächungskoeffizienten (2a) der Voxel (2) gelöst wird (192).

9. Verfahren (100) nach Anspruch 8, wobei mindestens ein Teil der Gleichungen (7) für Strahlbündel (4) aufgestellt wird (191a), die die Probe (1) auf zueinander rotierten und/oder translatorisch versetzten Wegen durchdringen.

10. Verfahren (100) nach einem der Ansprüche 8 bis 9, wobei das Gleichungssystem mit einem iterativen numerischen Lösungsverfahren gelöst wird (193).

11. Verfahren (100) nach einem der Ansprüche 7 bis 10, wobei ein Detektor mit einer ebenen oder ringförmigen für das Strahlbündel sensitiven Fläche gewählt wird (194).

12. Verfahren (100) nach einem der Ansprüche 1 bis 11, weiterhin umfassend: Beaufschlagen (105) der Probe (1) mit dem oder den Strahlbündeln (4) aus einer Strahlungsquelle sowie Registrieren (106) der Intensität (4b) des Strahlbündels (4) nach dem Durchdringen der Probe (1) mit mindestens einem Detektor.

13. Computerprogramm, enthaltend maschinenlesbare Anweisungen, die, wenn sie auf einem oder mehreren Computern und/oder Compute-Instanzen ausgeführt werden, den oder die Computer und/oder Compute-Instanzen dazu veranlassen, das Verfahren (100) nach einem der Ansprüche 1 bis 11 auszuführen.

14. Maschinenlesbarer Datenträger und/oder Downloadprodukt mit dem Computerprogramm nach Anspruch 13.

15. Ein oder mehrere Computer und/oder Compute-Instanzen mit dem Computerprogramm nach Anspruch 13, und/oder mit dem maschinenlesbaren Datenträger und/oder Downloadprodukt nach Anspruch 14.

Fig. 1a

Fig. 1a

3b

170a

170b

180

3b∀2

191

191a

193

190

192

194

2a,7

Fig. 1b

Fig. 2a

Fig. 2b

Fig. 3

Fig. 4

Fig. 5

Fig. 6

EP 4 498 323 A1

Fig. 7

Europäisches
Patentamt

European
Patent Office

Office européen
des brevets

# EUROPÄISCHER RECHERCHENBERICHT

**Nummer der Anmeldung**

EP 23 18 8102

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | HA SUNGSOO ET AL: "A Look-Up Table-Based Ray Integration Framework for 2-D/3-D Forward and Back Projection in X-Ray CT", IEEE TRANSACTIONS ON MEDICAL IMAGING, IEEE, USA, Bd. 37, Nr. 2, Februar 2018 (2018-02), Seiten 361-371, XP011676587, ISSN: 0278-0062, DOI: 10.1109/TMI.2017.2741781 [gefunden am 2018-02-01] * das ganze Dokument * | 1-16 | INV. G06T11/00 |
| A | NIU A ET AL: "IMAGE RECONSTRUCTION FROM CONE BEAM SCANNING USING ART WITH CYLINDRICAL VOXEL MODEL", NUCLEAR SCIENCE SYMPOSIUM CONFERENCE RECORD. ARLINGTON, OCT. 22 - 27, 1990; [PROCEEDINGS OF THE NUCLEAR SCIENCE SYMPOSIUM], NEW YORK, IEEE, US, Bd. 2 OF 02, 22. Oktober 1990 (1990-10-22) , Seiten 1445-1451, XP000232241, * das ganze Dokument * | 1-16 | |

**RECHERCHIERTE SACHGEBIETE (IPC)**

G06T

Der vorliegende Recherchenbericht wurde für alle Patentansprüche erstellt

| Recherchenort | Abschlußdatum der Recherche | Prüfer |
|---|---|---|
| München | 12. Januar 2024 | Werling, Alexander |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder  Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes
    Dokument

EPO FORM 1503 03.82 (P04C03)